# EUROPÄISCHE PATENTANMELDUNG

(11) **EP 1 717 748 A1**
(43) Veröffentlichungstag der Anmeldung: **02.11.2006**
(21) Anmeldenummer: 06007789.8
(22) Anmeldetag: 13.04.2006
(51) Int. Cl.: G06Q 30/00

(54) **Verfahren zum Bestellen eines Produkts bei einem mit einem Kommunikationsnetzwerk verbundenen Online-Shop**

(30) Priorität: 26.04.2005 DE 102005019315
(71) Anmelder: HURRA Communications GmbH, 70599 Stuttgart (DE)
(72) Erfinder: Schweier, René, 70599 Stuttgart (DE)
(74) Vertreter: Wörz, Volker Alfred

(57) **Zusammenfassung**

Um bei einer Bestellung eines Produkts bei einem Online-Shop auch nach einem längeren Zeitraum zwischen einer ersten Anzeige einer Netzwerkseite eines einem Online-Shop zugeordneten Werbepartners und der eigentlichen Bestellung eine möglichst eindeutige Zuweisung der Bestellung zu dem dem Werbepartner zu erreichen und dabei möglichst eine Verringerung des Netzverkehrs des Kommunikationsnetzwerks und eine Verringerung der Rechenlast eventuell beteiligter Tracking-Systeme zu erreichen, wird vorgeschlagen, dass
- automatisch mindestens eine Information bezüglich der Aktivierung von auf einer Netzwerksseite des Werbepartners (5, 6) dargestellten Links zu dem Online-Shop (9) von dem Client (2) an einen mit dem Kommunikationsnetzwerk verbundenen Server (10) gesendet wird;
- automatisch mindestens eine die Bestellung betreffende Information von dem Online-Shop (9) an einen Server (10) übermittelt wird; und
- auf dem Server (10) die abgespeicherten Informationen bezüglich der Aktivierung der Links statistisch ausgewertet werden, um die für das Produkt relevanten Werbepartner (5, 6) und die für das Produkt relevanten Netzwerkseiten zu ermitteln.

Falls der Werbepartner (5, 6) als eine Suchmaschine ausgestaltet ist, kann auf diese Weise die Relevanz der für die Links gebuchten Suchbegriffe für das Produkt bzw. den Online-Shop (9) beurteilt werden.

## Beschreibung

Die Erfindung betrifft ein Verfahren zum Bestellen eines Produkts bei einem mit einem Kommunikationsnetzwerk verbundenen Online-Shop, dem eine mindestens einen Werbepartner umfassende, mit dem Kommunikationsnetzwerk verbundene Menge von Werbepartnern zugeordnet ist, wobei
a) eine von einem dem Online-Shop zugeordneten Werbepartner bereitgestellte Netzwerkseite mittels eines einem Benutzer zugeordneten Client über das Kommunikationsnetzwerk angefordert wird;
b) die angeforderte Netzwerkseite an den Client übermittelt wird und dem Benutzer angezeigt wird;
c) der Benutzer einen auf der angezeigten Netzwerkseite dargestellten und dem Online-Shop zugeordneten Link aktiviert.

Die Erfindung betrifft auch ein Client-Server-System umfassend einen einem Benutzer zugeordneten Client, einen Online-Shop, dem mindestens ein Produkt zugeordnet ist, eine mindestens einen Werbepartner umfassende Menge von dem Online-Shop zugeordneten Werbepartnern, und ein Kommunikationsnetzwerk, mittels dessen eine Kommunikation zwischen dem Client, dem Werbepartner, und dem Online-Shop möglich ist, wobei
- jedem der dem Online-Shop zugeordneten Werbepartner eine Netzwerkseite zugeordnet ist, die mindestens einen durch den Client über das Kommunikationsnetzwerk anforderbaren Link zu dem Online-Shop aufweist;
- jeder Werbepartner Mittel aufweist, um die angeforderte Netzwerkseite automatisch an den Client zu übermitteln und der Client Mittel aufweist, um die empfangene Netzwerkseite dem Benutzer anzuzeigen; und
- der Client Mittel aufweist, um den auf der empfangenen Netzwerkseite dargestellten Link zu aktivieren.

Die Erfindung betrifft ferner einen Server in einem Kommunikationsnetzwerk, mit dem mindestens ein einem Benutzer zugeordneter Client, ein Online-Shop, eine mindestens einen Werbepartner umfassende Menge von dem Online-Shop zugeordneten Werbepartnern und mindestens ein mit mindestens einem der Werbepartner zugeordnetes Tracking-System verbunden sind.

Die Erfindung betrifft auch ein Computerprogramm, das auf einem Client-Server-System, insbesondere auf einem Client und/oder einem Server, ablauffähig ist.

Ein Online-Shop wird von einem Anbieter von Produkten (Waren oder Dienstleistungen) betrieben. Dabei umfasst der Online-Shop typischerweise einen Server in einem Kommunikationsnetzwerk, beispielsweise dem Internet. Dem Online-Shop sind Netzwerkseiten zugeordnet, die von einem ebenfalls mit dem Kommunikationsnetzwerk verbundenen Client angefordert werden können. Diese Netzwerkseiten werden auch als web-pages bezeichnet und enthalten Informationen bezüglich der angebotenen Produkte, beispielsweise Verkaufspreis und technische Details. Ein Benutzer des Online-Shops, also ein potenzieller Kunde, kann ein von dem Online-Shop angebotenes Produkt dadurch kaufen, dass er mittels des Client eine das Produkt beschreibende Netzwerkseite von dem Online-Shop anfordert, das Produkt auswählt und einen Bestellvorgang bezüglich des ausgewählten Produkts einleitet, um das Produkt zu kaufen.

Unter einem Online-Shop soll insbesondere auch ein Anbieter von Informationen verstanden werden. In diesem Fall sind die Informationen die Produkte des Online-Shops. Die Bestellung eines Produkts kann also auch die Anforderung von Informationen sein. Derartige Informationen sind beispielsweise Nachrichten, Börsenberichte, Bilder und Musikdateien.

Auch der Zugang zu Informationen an sich kann als Produkt eines Online-Shops angesehen werden. Beispielsweise kann von dem Online-Shop ein Zugang zu einem geschützten Bereich angeboten werden. Ein Benutzer bestellt dieses Produkt beispielsweise dadurch, dass er sich bei dem Online-Shop registriert. Der geschützte Bereich kann Informationen beinhalten, die nur den registrierten Benutzern zur Verfügung stehen. Die Bestellung eines Produkts geht damit in dem hier verwendeten Bedeutungsinhalt über das hinaus, was üblicherweise beispielsweise unter dem Kauf eines Produkts verstanden wird. Insbesondere ist die Bestellung eines Produkts nicht notwendigerweise an die Bezahlung eines Kaufpreises gebunden.

Die von dem Online-Shop an den Client übermittelbaren Netzwerkseiten sind üblicherweise in einem dem Online-Shop zugeordneten Speicherbereich abgespeichert oder werden dynamisch in Abhängigkeit der Anforderung durch den Benutzer erzeugt.

Bei einem Bestellvorgang werden benutzerspezifische Daten von dem Client an den Server übermittelt, die beispielsweise eine Adresse und eine Bankverbindung des Benutzers beschreiben. Mittels dieser Daten veranlasst der Online-Shop den Anbieter der Produkte ein Versenden der ausgewählten Produkte an den Benutzer und beispielsweise eine Abbuchung des entsprechenden Kaufpreises von einem Bankkonto des Benutzers.

Zur Beschreibung des Inhalts einer Netzwerkseite wird eine sogenannte Seitenbeschreibungssprache verwendet. Heutzutage wird dazu überwiegend die standardisierte Seitenbeschreibungssprache HTML (Hypertext Mark up Language) eingesetzt. HTML erlaubt es, den Inhalt und das Aussehen einer Netzwerkseite in Form eines sogenannten HTML-Dokuments zu beschreiben. Stellt beispielsweise der Benutzer mittels des Client eine Anfrage an den Online-Shop, so übermittelt der Online-Shop ein die angeforderten Informationen, also beispielsweise Beschreibungen, Verkaufspreis und eine Ansicht eines Produkts, enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument einem sogenannten Browser zugeführt. Als Browser bezeichnet man ein Computerprogramm, das in der Lage ist, HTML-Dokumente zu interpretieren und mittels einer geeigneten grafischen Oberfläche auf einem Datensichtgerät, beispielsweise einem Computerdisplay, darzustellen.

Um potentielle Kunden auf den Online-Shop oder auf von dem Online-Shop angebotene Produkte aufmerksam zu machen, sind dem Online-Shop sogenannte Werbepartner zugeordnet. Ein Werbepartner ist der Betreiber eines Servers, der Netzwerkseiten zur Verfügung stellt, die einen sogenannten Link zu dem Online-Shop aufweisen. Im folgenden wird dieser Server selbst als Werbepartner bezeichnet. Ein derartiger Link kann durch einen Benutzer aktiviert werden. Dies bewirkt, dass der dem Benutzer zugeordnete Client automatisch veranlasst wird, von dem Online-Shop eine Netzwerkseite anzufordern. Die so angeforderte Netzwerkseite kann beispielsweise die Hauptseite, die sogenannte home-page, des Online-Shops oder eine von dem Online-Shop bereitgestellte oder dynamisch erzeugte Netzwerkseite sein, die beispielsweise eine Beschreibung eines Produkts aufweist.

Ein derartiger Link wird häufig mittels eines sogenannten Werbebanners auf der Netzwerkseite des Werbepartners dargestellt. Der Werbebanner zeigt eine Text- oder Bildbotschaft und umfasst eine Verknüpfung zu einer Netzwerkseite des Online-Shops. Aktiviert der Benutzer dieses Werbebanner, so wird durch den dem Benutzer zugeordneten Client die Netzwerkseite des Online-Shops angefordert, mit der der Werbebanner verknüpft ist.

Der Werbepartner kann beispielsweise auch ein Betreiber einer sogenannten Suchmaschine (z.B. Google.de, Altavista.com, Yahoo.de, etc.) bzw. die Suchmaschine selbst sein. Eine Suchmaschine ist ein mit dem Kommunikationsnetzwerk verbundener Server, an den der Benutzer mittels des Client eine Anfrage in Form eines Suchbegriffes sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument durch den Server erzeugt, das schließlich an den Client übermittelt und dem Benutzer mittels des Browsers angezeigt wird. Häufig werden auf den von den Suchmaschinen in Abhängigkeit einer Anforderung von Informationen erzeugten Netzwerkseiten auch Werbebanner dargestellt, wobei die Werbebanner ihrerseits wiederum von Servern spezieller Dienstleister über das Internet zur Verfügung gestellt werden können. Sowohl die ermittelten Treffer des Suchergebnisses als auch die Werbebanner auf der Netzwerkseite der Suchmaschine können als dem Online-Shop zugeordnete Links im Sinne der vorliegenden Erfindung bezeichnet werden.

Der Werbepartner kann aber auch ein Betreiber einer Einrichtung im Internet zum Vergleichen von Produktpreisen (z.B. Guenstiger.de, Kelkoo.de, Evendi.de, etc.) oder der Preisvergleich selbst sein. Ein Internet-Preisvergleich umfasst ein mit das Kommunikationsnetzwerk verbundenen Server, an den der Benutzer mittels des Client eine Anfrage in Form eines Suchbegriffes sendet, der vorzugsweise dem Produktnamen entspricht. Der Preisvergleich ermittelt anhand vorgebbarer Regeln in Abhängigkeit von dem übermittelten Suchbegriff eine Liste mit Verkäufern des gesuchten Produkts mit den entsprechenden Produktpreisen. Der Preisvergleich veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument durch den Server erzeugt, das schließlich an den Client übermittelt und dem Benutzer mittels des Browsers angezeigt wird. Auch auf den Netzwerkseiten des Preisvergleichs können einem Online-Shop zugeordnete Links in Form von Werbebannern dargestellt werden.

Kauft der Benutzer bei dem Online-Shop ein Produkt, so erhält der Werbepartner in der Regel eine Vergütung, da der Benutzer durch den Werbepartner auf den Online-Shop aufmerksam gemacht wurde. Die Höhe der Vergütung kann beispielsweise prozentual vom Verkaufpreis des Produkts oder von dem mit dem Verkauf erzielten Gewinn abhängen. Die Vergütung kann aber auch einem festen Geldbetrag entsprechen.

Es ist auch möglich, dass der Benutzer von dem Online-Shop eine Netzwerkseite angefordert hat und zu einem späteren Zeitpunkt ein Produkt kauft, ohne über einen auf einer Netzwerkseite des Werbepartners dargestellten Link auf den Online-Shop aufmerksam gemacht worden zu sein. In diesem Fall steht dem Werbepartner keine Vergütung für die erfolgte Bestellung zu.

Um zu ermitteln, ob der Benutzer durch den Werbepartner zu dem Online-Shop geführt wurde oder ob der Benutzer auf anderem Wege zu dem Online-Shop gelangte, ist es denkbar, dass der Werbepartner dem Client des Benutzers bei der Aktivierung des Links, mittels dessen der Client eine Netzwerkseite des Online-Shops anfordert, Daten übermittelt und den Client veranlasst, diese Daten auf einem dem Client zugeordneten Speicherbereich abzuspeichern. Diese Daten können beispielsweise eine Identifikation des Werbepartners beinhalten. Auf Anforderung kann der Client die abgespeicherten Daten an den Anfordernden übermitteln. Ist der Anfordernde der Online-Shop, so kann er erkennen, ob dem Werbepartner eine Vergütung zusteht, indem er prüft, ob die Information eine Identifikation des Werbepartners beinhaltet, bzw. ob überhaupt eine abgespeicherte Information bei dem Client vorliegt.

Dieses Verfahren bedeutet jedoch, dass ein Server (hier: der Online-Shop) von einem Client (hier: der dem Benutzer zugeordnete Client) Daten anfordern kann, die von einem anderen Server (hier: der Werbepartner) an den Client übermittelt wurden. Eine solche Vorgehensweise ist aus Sicherheitsgründen (beispielsweise aus Datenschutzgründen) nicht wünschenswert, da bei diesem Verfahren nur schwer zu verhindern ist, dass ein Server nicht auch andere Daten von dem Client anfordert.

Um dieses Problem zu umgehen, wird üblicherweise ein sogenanntes Cookie eingesetzt. Fordert der Benutzer mittels des Client von dem Werbepartner eine Netzwerkseite an, so veranlasst der Werbepartner, dass neben der Netzwerkseite zusätzliche Informationen an den Client übermittelt werden und diese Informationen in einem dem Client zugeordneten Speicherbereich abgespeichert werden. Die so abgespeicherten Informationen werden als Cookie bezeichnet. Man spricht hier auch vom "Setzen eines Cookies". Ein Cookie kann auch gesetzt werden, wenn der Client einen auf einer Netzwerkseite dargestellten Link aktiviert. Fordert der Client erneut eine Netzwerkseite von dem Werbepartner an, so kann das Cookie zusammen mit der Anforderung von dem Client an den Werbepartner übermittelt werden. Ein Cookie ist üblicherweise derart realisiert, dass es nur an den Werbepartner zurückgeschickt werden kann, der den Client zum Setzen des Cookies veranlasst hat.

Um mittels eines Cookies bei einer durchgeführten Bestellung eines Produkts zu ermitteln, ob der Benutzer über einen Werbepartner des Online-Shops zu diesem geführt wurde, veranlasst der Online-Shop den Client, an den dem Online-Shop zugeordneten Werbepartner das von diesem Werbepartner gesetzte Cookie zu senden. Erhält der Werbepartner daraufhin das Cookie von dem Client, so sendet der Werbepartner eine Nachricht (sogenannte Vergütungsforderung) an den Online-Shop, der daraufhin eine Vergütung veranlasst. Erhält der Werbepartner kein Cookie von dem Client, dann übermittelt er auch keine Nachricht an den Online-Shop um eine Vergütung zu erhalten. Ein Cookie wird insbesondere dann nicht an den Werbepartner übermittelt, wenn mindestens eine der beiden Bedingungen erfüllt ist:
- Der Benutzer hat bei dem Online-Shop kein Produkt gekauft und somit fordert der Online-Shop den dem Benutzer zugeordneten Client nicht zur Übersendung des Cookie an den Werbepartner auf.
- Der Benutzer wurde nicht über den Werbepartner zu dem Online-Shop geführt und weist deshalb kein von dem Werbepartner gesetztes Cookie auf.

Ein Cookie weist üblicherweise eine vorgebbare "Lebensdauer" (sogenannte Laufzeit) auf, die eine Zeitdauer beschreibt, während der das Cookie existieren soll. Nach Ablauf der Laufzeit wird das Cookie automatisch von dem Client gelöscht. Eine derartige Laufzeit eines Cookies beträgt beispielsweise 30 Tage.

Einem Cookie kann auch eine sogenannte Vertraulichkeitsstufe zugeordnet sein. Eine Vertraulichkeitsstufe eines Cookies wird beispielsweise in Abhängigkeit der Art in dem Cookie abgespeicherten Daten bestimmt. Je vertraulicher diese Daten sind, desto größer kann die Vertraulichkeitsstufe sein. Ein Browser wiederum kann die Möglichkeit vorsehen, nur Cookies bestimmter Vertraulichkeitsstufen zu setzen bzw. nur Cookies bestimmter Vertraulichkeitsstufen an einen ein bei dem Client gesetztes Cookie anfordernden Server zu senden.

Es ist möglich, dass ein Benutzer von dem Werbepartner eine einen Link zu dem Online-Shop aufweisende Netzwerkseite anfordert, der Werbepartner bei dem Client ein Cookie setzt, der Benutzer jedoch zunächst kein Produkt kauft. Fordert der Benutzer nun zu einem späteren Zeitpunkt mittels des Clients eine Netzwerkseite von dem Online-Shop an, ohne in diesem Fall einem Link des Werbepartners gefolgt zu sein, also beispielsweise durch direkte Anwahl des Online-Shops, und bestellt der Benutzer nun ein Produkt, so ist es bei dem oben beschriebenen Verfahren möglich, dass der Werbepartner dennoch eine Vergütung erhält, falls die Lebensdauer des von dem Werbepartner gesetzten Cookies nicht überschritten ist und das Cookie folglich nicht gelöscht worden ist.

Folgt ein Benutzer ein weiteres Mal dem Link eines Werbepartners innerhalb der Lebensdauer des zuerst gesetzten Cookies, so wird nach dem derzeitigen Stand der Technik kein neues Cookie gesetzt, sondern das bereits bestehende Cookie dahingehend aktualisiert, dass die Lebensdauer erneut auf den vorgegebenen Wert (also beispielsweise wieder 30 Tage) gesetzt wird.

Typischerweise sind einem Online-Shop mehrere Werbepartner zugeordnet. Somit muss bei einer durchgeführten Bestellung eines Produkts bei dem Online-Shop derjenige Werbepartner ermittelt werden, über dessen Link der Benutzer zu dem Online-Shop geführt wurde.

Um in diesem Fall bei einer durchgeführten Bestellung eines Produkts durch den Benutzer bei dem Online-Shop den Werbepartner zu ermitteln, über dessen Link der Benutzer zu dem Online-Shop geführt wurde, setzt wieder derjenige Werbepartner bei dem Client ein Cookie, über dessen Netzwerkseite durch Aktivierung des dort dargestellten Links der Benutzer zu dem Online-Shop geführt wird. Bestellt der Benutzer daraufhin - oder wie oben dargestellt, zu einem späteren Zeitpunkt innerhalb der Laufzeit des Cookies - bei dem Online-Shop ein Produkt, so veranlasst der Online-Shop den Client, das von dem Werbepartner, über dessen Link der Benutzer zu dem Online-Shop geführt wurde, gesetzte Cookie, an diesen Werbepartner zu übermitteln. Der Werbepartner, der dieses Cookie erhält, sendet sodann eine Mitteilung an den Online-Shop, der so den Werbepartner identifizieren und diesem eine Vergütung zukommen lassen kann.

Tracking-Systeme sind beispielsweise unter http://www.zanox.de oder unter http://www.affilinet.de über das Internet erreichbar. Ein Tracking-System ermöglicht es einem Online-Shop einerseits, einen oder mehrere der dem Tracking-System zugeordneten Werbepartner auszuwählen. Andererseits kann ein Online-Shop dort Links (z.B. Werbebanner) hinterlegen, die dann von potentiellen, bei dem Tracking-System registrierten Werbepartnern auf deren Netzwerkseiten dargestellt werden können. Ein Tracking-System verwaltet damit beispielsweise die Werbepartner eines Online-Shops. Der Online-Shop selbst muss in diesem Fall nicht notwendigerweise Informationen über die Identität der Werbepartner selbst besitzen. Zweckmäßigerweise wird das Tracking-System den Online-Shop jedoch regelmäßig über die aktuell dem Online-Shop zugeordneten Werbepartner informieren. Das Tracking-System kann bspw. bestimmte Suchbegriffe bei einer Suchmaschine buchen, so dass bei der Eingabe eines der gebuchten Suchbegriffe durch einen Benutzer, diesem dem Online-Shop zugeordnete Links in Form von Treffern des Suchergebnisses und/oder in Form von Werbebannern auf der Netzwerkseite der Suchmaschine ausgegeben werden.

Ist einer oder sind mehrere der dem Online-Shop zugeordneten Werbepartner einem Tracking-System zugeordnet, so veranlasst der Online-Shop im Falle einer Bestellung eines Produkts durch einen Benutzer den Client, alle dort abgelegten Cookies, die von einem dem Tracking-System zugeordneten Werbepartner bei dem Client gesetzt wurden, an den jeweiligen Werbepartner zu übermitteln. Die Werbepartner wiederum, die eine Kopie des bei dem Client gesetzten Cookies von diesem erhalten, senden eine Nachricht an das Tracking-System. Das Tracking-System wertet diese Nachrichten aus und sendet eine gebündelte Vergütungsforderung an den Online-Shop. Auch in diesem Fall besteht das oben beschriebene Problem der unerwünschten Mehrfachvergütungen.

Da es eine Vielzahl von Tracking-Systemen auf dem Markt gibt, sind häufig die Werbepartner eines Online-Shops mehreren unterschiedlichen Tracking-Systemen zugeordnet. Dadurch kann sich das Problem der unerwünschten Mehrfachvergütungen noch weiter verstärken, da nun mehrere Tracking-Systeme ihre gebündelten Vergütungsforderungen an den Online-Shop senden.

Gegenwärtig bestehen am Markt nahezu alle denkbaren Formen und Mischformen der oben genannten Anordnungen von Werbepartnern. Dabei tritt insbesondere der Fall auf, dass einem Online-Shop Werbepartner mehrerer Tracking-Systeme, sowie Werbepartner, die an kein Tracking-System angeschlossen sind, zugeordnet sind. Nahezu immer, wenn einem Online-Shop mehrere Werbepartner zugeordnet sind und einem oder mehreren Werbepartner ein Tracking-System zugeordnet ist, ist die Ermittlung desjenigen Werbepartners, über dessen Link der Benutzer zu dem Online-Shop geführt wurde und durch dessen Vermittlung schließlich die Bestellung eines Produkts zustande kam, nicht möglich. Dies führt beispielsweise zu den oben genannten Mehrfachvergütungen.

Der Online-Shop bezahlt entweder direkt oder indirekt über das Tracking-System den Werbepartnern einen bestimmten Betrag für die Platzierung von dem Online-Shop zugeordneten Links auf einer oder mehreren Netzwerkseiten des Werbepartners, d.h. dafür, dass bei der Eingabe bestimmter Suchbegriffe bei dem Werbepartner ein entsprechender dem Online-Shop zugeordneter Link auf der Netzwerk-Seite des Werbepartners dargestellt wird. Betätigt der Benutzer, der die von dem Werbepartner bereitgestellte Netzwerkseite angefordert hat, diesen Link, wird er zu der entsprechenden Netzwerkseite des Online-Shops weitergeleitet. Ziel des Online-Shops bzw. des Tracking-Sytems ist es , über die platzierten Links zum einen möglichst viele Benutzer zu dem Online-Shop hinzuführen und zum anderen möglichst viele Benutzer zum Kauf eines gesuchten Produkts bei dem Online-Shop zu veranlassen. Dies ist insbesondere vor dem Hintergrund von großer Bedeutung, dass schlecht platzierte Links unnötig Speicher- und Übertragungskapazität in dem Kommunikationsnetzwerk des Client-Server-Systems verbrauchen und der Online-Shop Geld für ineffektiv platzierte Links ausgibt.

Ausgehend von diesem Stand der Technik liegt der vorliegenden Erfindung die Aufgabe zugrunde, eine Möglichkeit zur Verfügung zu stellen, die eine möglichst effektive Platzierung von Links auf Netzwerkseiten von Werbepartnern ermöglicht, und dabei möglichst eine Verringerung des Netzverkehrs des Kommunikationsnetzwerks und eine Verringerung der Rechenlast eventuell beteiligter Tracking-Systeme zu erreichen.

Die Aufgabe wird durch ein Verfahren mit den Verfahrensschritten a) bis c) der eingangs genannten Art dadurch gelöst, dass
d) bei der Aktivierung des Links automatisch mindestens eine Information bezüglich der Aktivierung des Links von dem Client an einen mit dem Kommunikationsnetzwerk verbundenen Server gesendet und dort abgespeichert wird;
e) automatisch eine dem Online-Shop zugeordnete Netzwerkseite durch den Client angefordert wird;
f) die Schritte a) bis e) solange wiederholt werden, bis der Benutzer das Produkt bei dem Online-Shop bestellt, so dass dann Informationen bezüglich der Aktivierung mehrerer Links, unter Umständen auch von verschiedenen Netzwerkseiten, die von verschiedenen Werbepartnern zur Verfügung gestellt werden, in dem Server abgespeichert sind;
g) automatisch mindestens eine die Bestellung betreffende Information von dem Online-Shop an den Server übermittelt und dort abgespeichert wird; und
h) auf dem Server die abgespeicherten Informationen bezüglich der Aktivierung der Links statistisch ausgewertet werden, um die für das Produkt relevanten Werbepartner und die für das Produkt relevanten auf der angezeigten Netzwerkseite dargestellten und dem Online-Shop zugeordneten Links zu ermitteln.

Vorteilhafterweise ist mindestens einem der Werbepartner mindestens ein Tracking-System zugeordnet, das mit dem Kommunikationsnetzwerk verbunden ist, wobei das dem ausgewählten Werbepartner zugeordnete Tracking-System automatisch ermittelt wird und von dem Server automatisch mindestens ein Teil der die Bestellung betreffenden Information an das dem ausgewählten Werbepartner zugeordnete Tracking-System übermittelt wird.

Erfindungsgemäß wird also bei der Aktivierung eines zu dem Online-Shop verweisenden Links, der auf einer von dem Werbepartner zur Verfügung gestellten Netzwerkseite dargestellt ist, eine Information bezüglich der Aktivierung des Links von dem Client an einen mit dem Kommunikationsnetzwerk verbundenen Server gesendet. Falls mindestens einem der Werbepartner ein Tracking-System zugeordnet ist, kann der Server Teil dieses Tracking-Systems sein.

Eine Information bezüglich der Aktivierung eines Links kann beispielsweise eine Kennung des Links sein. Durch die Aktivierung des Links wird automatisch von dem Online-Shop eine Netzwerkseite angefordert, beispielsweise die home-page des Online-Shops oder die Beschreibung eines Produkts.

Wird daraufhin keine Bestellung bei dem Online-Shop durchgeführt, so werden die Schritte a) bis e) solange wiederholt, bis eine Bestellung bei dem Online-Shop erfolgt.

Da die Schritt a) bis e) wiederholt werden, ist es möglich, dass der Benutzer mittels des Client nacheinander Netzwerkseiten von mehreren verschiedenen, dem Online-Shop zugeordneten Werbepartnern anwählt, einen auf diesen Netzwerkseiten dargestellten Link aktiviert und dadurch ausgehend von den Netzwerkseiten verschiedener Werbepartner mehrmals eine Netzwerkseite des Online-Shop anfordert. Es ist ferner vorgesehen, dass der Benutzer zwar zunächst keine Bestellung durchführt, dann aber mittels des Client zu einem späteren Zeitpunkt eine Netzwerkseite des Online-Shops durch direkte Anwahl anfordert und im Anschluss daran eine Bestellung bei dem Online-Shop durchführt. Mit dem erfindungsgemäßen Verfahren ist es also möglich, das Netzwerk-Verhalten des Benutzers auch über einen längeren Zeitraum bzw. über mehrere Clicks zurückzuverfolgen und zu ermitteln, welcher der vor der Bestellung des Produkts aktivierten Links tatsächlich Auslöser für die Bestellung in dem Online-Shop war. Dazu werden die Informationen vorzugsweise kumulativ abgespeichert. Die Informationen können in einem geeigneten Speicherbereich entweder direkt auf dem Server oder aber auf dem Client kumulativ abgespeichert werden.

Bei der Durchführung der Bestellung wird automatisch eine die Bestellung betreffende Information von dem Online-Shop an den Server übermittelt. Dadurch erlangt der Server Kenntnis, dass eine Bestellung erfolgt ist und er kann mit der statistischen Auswertung der abgespeicherten, die Aktivierung der Links betreffenden Informationen beginnen. Dabei spielt es eine Rolle, dass nicht nur die von dem Benutzer zuletzt, unmittelbar vor der Bestellung des Produkts eingegebenen Suchbegriffe von Relevanz für das bestellte Produkt sein können, sondern auch die zuvor eingegebenen Suchbegriffe, obwohl sie nicht unmittelbar zur Bestellung des Produkts geführt haben. Es ist aber denkbar, dass die zuvor eingegebenen Suchbegriffe eine wichtige, möglicherweise sogar unentbehrliche, Grundlage für die spätere Bestellung des Produkts bilden. Wären die zuvor eingegebenen Suchbegriffe bei den Werbepartner nicht gebucht worden und wäre bei Eingabe dieser Suchbegriffe kein Link auf der Netzwerkseite des Werbepartners dargestellt worden, hätte dies unter Umständen zur Folge gehabt, dass der Benutzer das gesuchte Produkt bei einem anderen Online-Shop bestellt hätte. Insofern sind auch die zuvor eingegebenen Suchbegriffe, bzw. die damit verbundenen, auf der Netzwerkseite des Werbepartners dargestellten Links, von Bedeutung für die Bestellung des Produkts bei dem Online-Shop durch den Benutzer.

Wenn bspw. für einen als Geldinstitut ausgebildeten Online-Shop der Suchbegriff "anlegen" für die Darstellung von Werbebannern auf den Netzwerkseiten von Werbepartnern gebucht wird, führt dies dazu, dass jedes Mal, wenn der Suchbegriff "anlegen" von dem Benutzer eingegeben wird (bspw. bei "Geld anlegen" oder "Konto anlegen"), ein der Bank zugeordneter Werbebanner mit einer Verknüpfung zu der Internetseite der Bank auf der Netzwerkseite des Werbepartners dargestellt wird. Das bedeutet aber auch, dass bei der Eingabe von "Teich anlegen" als Suchbegriff durch den Benutzer der Werbebanner der Bank angezeigt wird. Clickt ein Benutzer nach der Eingabe von "Teich anlegen" den Link zu dem Geldinstitut und gelangt er zu dessen home-page, wird es mit großer Wahrscheinlichkeit nicht zu einem Abschluss (Bestellung eines Produkts) kommen. Es ist denkbar, dass dem Server auch der gesamte eingegebene Suchstring (z.B. "Teich anlegen"), der sog. Referrer, als Teil der Informationen betreffend den aktivierten Link übermittelt wird. Anhand dieser Information (z.B. "Teich anlegen") kann der Server dann die Relevanz der Netzwerkseite (z.B. des gebuchten Suchbegriffs "anlegen") für das Produkt (z.B. Geldanlage, Girokonto) bzw. den Online-Shop (z.B. Geldinstitut) ermitteln. In dem Beispiel kann so festgestellt werden, dass der Suchbegriff "anlegen" nur bedingt geeignet ist, um für die Platzierung eines Werbebanners eines Geldinstituts gebucht zu werden.

Die Ausgaben für die Platzierung dieses Suchbegriffes bei den Werbepartnern können in Zukunft verringert oder ganz gestrichen werden. Folglich werden für diesen Suchbegriff in Zukunft entweder bei weniger Werbepartnern oder gar nicht mehr Werbebanner über das Kommunikationsnetzwerk übertragen und auf der Netzwerkseite des Werbepartners dargestellt. Somit hat die Erfindung zudem den Vorteil, dass das Kommunikationsnetzwerk aufgrund der geringen zu übertragenden Datenmenge entlastet wird. Bei der sehr großen und weiter steigenden Anzahl von Einkäufen bei Online-Shops wird mit dem erfindungsgemäßen Verfahren eine signifikante Einsparung von Ressourcen (Netzlast und Rechenzeit) erreicht. Unter Berücksichtigung der vielen Suchanfragen, die täglich über das Internet abgewickelt werden, kann die Erfindung zu einer beträchtlichen Entlastung des Internet und aufgrund der frei gesetzten Ressourcen zu einer deutlichen Steigerung der Übertragungsgeschwindigkeit über das Internet führen.

Mit der Erfindung ist es auch möglich, dass der Server aus der Menge der dem Online-Shop zugeordneten Werbepartner nach einem bestimmten Kriterium einen Werbepartner auswählt, der die Vergütung für die erfolgte Bestellung des Produkts erhalten soll. Gemäß dem Kriterium kann bspw. derjenige Werbepartner ausgewählt werden, dem die Netzwerkseite zugeordnet ist, dessen dem Online-Shop zugeordneter Link zuletzt vor der Bestellung durch den Benutzer aktiviert wurde. Der Server verwendet dabei zumindest die Information bezüglich der Aktivierung des Links, die während der Aktivierung der Links an den Server übermittelt worden ist. Diese Information wird beispielsweise in einem dem Server zugeordneten Speicherbereich abgespeichert und ermöglicht es somit dem Server, bei der Auswahl des Werbepartners auf die Information zuzugreifen.

Ist der ausgewählte Werbepartner einem Tracking-System zugeordnet, so ermittelt der Server außerdem automatisch das Tracking-System und übermittelt mindestens eine Information, die es dem Tracking-System ermöglicht, so zu verfahren, als wäre der Server nicht vorhanden. Darin ist ein wichtiger Punkt der Erfindung zu sehen, da die Erfindung realisierbar ist, ohne dass aufwändige Änderungen des Tracking-Systems notwendig sind.

Ist der Werbepartner nicht einem Tracking-System zugeordnet, so wird automatisch von dem Server ein Teil der die Bestellung betreffenden Information an den Client übermittelt. Damit wird der Client davon in Kenntnis gesetzt, dass eine Bestellung stattgefunden hat und er eine Vergütung erhält. Es ist möglich, auch wenn der Werbepartner einem Tracking-System zugeordnet ist und eine die Bestellung betreffende Nachricht an das Tracking-System gesendet wird, dennoch eine Nachricht an den ausgewählten Werbepartner zu senden.

Durch die Auswahl eines bestimmten Werbepartners, der allein die Vergütung für die Bestellung des Produkts erhalten soll, kann gegenüber dem bisherigen Verfahren, dass nämlich alle Werbepartner, bei denen der Benutzer auf dem Weg zur Bestellung eine Netzwerkseite aufgerufen und einen auf der Seite dargestellten Link aktiviert hat, eine Vergütung erhalten, ein wesentlich gerechteres Vergüten der Werbepartner und beim Online-Shop eine deutliche Einsparung an Vergütung ermöglicht werden. Aufgrund der in dem Server abgespeicherten Informationen bezüglich der aktivierten Links kann ermittelt werden, wie viele Werbepartner nach dem bisherigen Verfahren hätten vergütet werden müssen. Durch einen Vergleich der Vergütung, die bisher hätte gezahlt werden müssen, mit der dank des erfindungsgemäßen Verfahrens zu zahlenden Vergütung kann die durch die Erfindung erzielte Einsparung ermittelt werden. Die Einsparung kann in regelmäßigen Abständen oder auf Wunsch, als absoluter Zahlenwert oder in Prozent ausgegeben werden.

Das erfindungsgemäße Verfahren erlaubt es folglich, auf transparente Weise, also ohne dass ein bestehendes System aus Werbepartnern und Tracking-Systemen dabei aufwändig verändert zu werden braucht, den Verlauf der von einem Benutzer vor der Bestellung eines Produkts angewählten Netzwerkseiten und aktivierten Links auch im Nachhinein noch zu verfolgen. Dies kann bspw. für eine Auswahl eines Werbepartners, dem eine erfolgte Bestellung bei dem Online-Shop zugerechnet werden soll, genutzt werden.

Das erfindungsgemäße Verfahren hat ferner den Vorteil, dass deutlich weniger Nachrichten über das Kommunikationsnetzwerk übermittelt werden müssen und die Tracking-Systeme selbst deutlich weniger belastet werden, da nur dasjenige Tracking-System eine Nachricht erhält und diese auswerten muss, das dem ausgewählten Werbepartner zugeordnet ist.

In der Regel erhält der ausgewählte Werbepartner in Abhängigkeit der Bestellung eine Vergütung. Da mit dem erfindungsgemäßen Verfahren ein Werbepartner aus der Menge der dem Online-Shop zugeordneten Werbepartnern ausgewählt werden kann, dem eine erfolgte Bestellung zugerechnet wird, verhindert die Erfindung wirksam eine Mehrfachvergütung, bei der mehrere Werbepartner eine Vergütung für ein und dieselbe Bestellung erhalten würden.

Gemäß einer vorteilhaften Weiterbildung der Erfindung wird vorgeschlagen, dass unter Verwendung der abgespeicherten Informationen bezüglich der Aktivierung des Links automatisch mindestens ein relevanter Werbepartner aus der Menge der Werbepartner, von denen der Benutzer eine Netzwerkseite angefordert und einen auf den Online-Shop verweisenden Link aktiviert hat, ausgewählt wird. Auf diese Weise können die Links für verschiedene Produkte des Online-Shops bei ausgewählten Werbepartnern optimal (effizient, kosten- und ressourcensparend) platziert werden.

Gemäß einer bevorzugten Ausführungsform der vorliegenden Erfindung wird vorgeschlagen, dass unter Verwendung der abgespeicherten Informationen bezüglich der Aktivierung des Links automatisch aus einer Vielzahl von bei den Werbepartnern gebuchter, auf den Online-Shop verweisender Links mindestens ein relevanter Link ausgewählt wird. Auf diese Weise können optimale (effiziente, kosten- und ressourcensparende) Netzwerkseiten bzw. Suchbegriffe für die Links für verschiedene Produkte des Online-Shops ermittelt und bei den Werbepartnern gebucht werden.

In einer bevorzugten Ausführungsform des Verfahrens wird der Client in dem Schritt b) durch den Werbepartner, nach dem Schritt d) durch den Server, und/oder in dem Schritt e) durch den Online-Shop veranlasst, automatisch eine Information in einem dem Client zugeordneten Speicherbereich abzuspeichern. Die abgespeicherten Informationen ermöglichen es dem Client, beispielsweise eine Übersicht über die in der Vergangenheit angeforderten Netzwerkseiten zu erhalten. Gleichzeitig ermöglicht diese Ausführungsform, dass der Server, der Online-Shop und/oder der Werbepartner bei dem Client die dort abgespeicherte Information wieder anfordern können und somit einen Überblick über die von dem Client von dem Server, dem Online-Shop und/oder dem Werbepartner angeforderten Netzwerkseiten bekommen können.

Vorteilhafterweise übermittelt der Client die in dem dem Client zugeordneten Speicherbereich abgespeicherten Informationen automatisch an den Werbepartner, den Server, das Tracking-System und/oder den Online-Shop. Dies kann beispielsweise durch den Client immer dann automatisch durchgeführt werden, wenn dieser von dem Werbepartner, dem Tracking-System, dem Online-Shop oder dem Server eine Netzwerkseite anfordert. Das erspart es dem Werbepartner, dem Tracking-System, dem Online-Shop und dem Server, selbst Verfahren zur Abfrage der bei dem Client abgespeicherten Informationen vorzusehen, und erlaubt ihnen dennoch, einen Überblick beispielsweise über die Art und Häufigkeit der Anforderung von Netzwerkseiten durch den Client zu erhalten.

Vorzugsweise veranlasst der Online-Shop automatisch bei der Bestellung eines Produkts den Client, die in dem dem Client zugeordneten Speicherbereich abgespeicherten Informationen an den Server zu übermitteln. Mit der Bestellung des Produkts ist der Aufzeichnungs- oder Loggingvorgang abgeschlossen. Die aufgezeichneten Informationen können in dem Server ausgewertet werden. Die abgespeicherten und an den Server übermittelten Informationen können beispielsweise Auskunft darüber geben, von welchen Werbepartnern der Client vor der Abgabe der Bestellung bei dem Online-Shop eine Netzwerkseite angefordert hat und welche Netzwerkseiten er sich hat anzeigen lassen. Derartige Informationen wiederum können bei der Auswahl geeigneter Werbepartner oder geeigneter Netzwerkseiten, auf denen der dem Online-Shop zugeordnete Link dargestellt werden soll, durch den Server vorteilhaft eingesetzt werden.

Der Online-Shop kann automatisch eine Bestellbestätigungsseite an den Client übermitteln und den Client damit veranlassen, die in dem dem Client zugeordneten Speicherbereich abgespeicherten Informationen an den Server zu übermitteln. Mittels einer Bestellbestätigungsseite informiert der Online-Shop den Benutzer über die Annahme der von dem Benutzer initiierten Bestellung. Eine Bestellbestätigungsseite kann ferner den Gesamtpreis und ein voraussichtliches Lieferdatum des bestellten Produkts enthalten.

Die Bestellbestätigungsseite kann auch ein sogenanntes Script enthalten, das aus Anweisungen besteht, die von dem Client ausgeführt werden, wenn er die Bestellbestätigungsseite erhält. Das Script kann im vorliegenden Fall Anweisungen enthalten, die den Client veranlassen, Informationen an den Server zu senden, die von dem Server bei der Auswahl des Werbepartners und der Netzwerkseiten (d.h. der Suchbegriffe) verwendet werden. Das Script kann aber auch die Bestellung betreffende Informationen enthalten, die in dem Schritt g) von dem Online-Shop an den Server übermittelt werden. In diesem Fall würden die die Bestellung betreffenden Informationen folglich zunächst an den Client und dann an den Server übermittelt werden.

Vorzugsweise werden die in dem dem Client zugeordneten Speicherbereich abgespeicherten Informationen in Form eines Cookies bei dem Client abgespeichert. Dies ermöglicht einerseits die Nutzung bei dem Client bereits vorhandener Mechanismen und andererseits kann damit erreicht werden, dass der Client nur die Informationen an einen Empfänger (Werbepartner, Tracking-System, Server oder Online-Shop) übermittelt, die zuvor von diesem Empfänger bei dem Client in Form des Cookies abgelegt wurden, was die Datensicherheit erhöht.

Bei dieser Ausführungsform des Verfahrens kann die Vertraulichkeitsstufe des Cookies besonders niedrig gesetzt sein, beispielsweise weil das Cookie besonders wenig persönliche Informationen des Benutzers und/oder des Client enthält. Die für eine Bestellung des Produkts notwendigen Informationen werden beispielsweise von dem Client direkt an den Online-Shop übermittelt.

Nach Verstreichen einer vorgegebenen Lebensdauer des Cookies wird der alte Cookie nicht einfach durch einen neuen Cookie ersetzt, sondern vorzugsweise ein neuer Cookie generiert und in dem dem Client zugeordneten Speicherbereich abgespeichert, wobei in dem neu generierten Cookie zumindest ein Teil der Informationen des abgelaufenen Cookies enthalten sind. Mittels dieses erneuerbaren Cookies, in dem die Informationen bezüglich der Aktivierung des Links kumulativ abgelegt sind, kann das Surf-Verhalten des Benutzers auch über einen längeren Zeitraum bzw. über mehrere Clicks hinweg beobachtet, protokolliert und im Sinne der vorliegenden Erfindung ausgewertet werden, ohne dass Cookies mit einer extrem langen Lebensdauer gesetzt werden müssten.

Alternativ können die in dem Server abgespeicherten Informationen, insbesondere die Informationen bezüglich der Aktivierung des Links, auch in Form einer History-Datei oder einer Logging-Datei, bspw. in einem Speicherbereich des Servers, abgespeichert werden. In der History- oder Logging-Datei können alle Informationen kumulativ protokolliert werden und stehen somit jederzeit für eine Auswertung zur Verfügung.

Vorteilhafterweise enthält die in dem Schritt d) von dem Client bezüglich der Aktivierung des Links an den Server übermittelte Information ein Datum, eine Uhrzeit, eine Identifikation des Client, eine Identifikation des Benutzers, eine Identifikation des Werbepartners und/oder eine Identifikation eines dem Werbepartner zugeordneten Tracking-Systems. Derartige Informationen können beispielsweise in einer Datenbank des Server abgelegt werden und sind besonders geeignet, bei der Auswertung der die Aktivierung der Links betreffenden Informationen und der Auswahl der Werbepartner und/oder Netzwerkseiten eingesetzt zu werden.

Vorzugsweise stellt der Server dem Online-Shop eine oder mehrere der in dem dem Server zugeordneten Speicherbereich gespeicherten Informationen zur Verfügung. Dies kann beispielsweise dadurch geschehen, dass sich der Online-Shop über ein sogenanntes Portal des Servers bei diesem anmeldet um dann Einsicht in die dort gespeicherten Informationen zu nehmen. Diese Informationen können insbesondere auch Informationen bezüglich der Aktivierung des Links sein. Damit kann der Online-Shop beispielsweise Statistiken erstellen und Informationen darüber erhalten, welcher Link auf welcher Netzwerkseite welches Werbepartners auf dem Weg zur Bestellung eines Produkts besonders häufig aktiviert wurde und deshalb von besonderer Relevanz für das Produkt bzw. für den Online-Shop ist. Ist ein Link beispielsweise als Werbebanner ausgebildet, so kann der Online-Shop in Abhängigkeit der Ergebnisse einer derartigen Statistik veranlassen, diejenigen Links zu verändern oder zu entfernen, die selten aktiviert werden.

Zum Auswerten der Informationen betreffend die aktivierten Links können bspw. die gebuchten Suchbegriffe (z.B. "anlegen") mit den von dem Benutzer im Rahmen der Suche tatsächlich eingegebenen Suchstrings (z.B. "Teich anlegen") bestimmten Produktkategorien (z.B. "Finanzdienstleistung" bzw. "Gartenbau") mit beliebig vielen Unterkategorien zugeordnet werden. Durch Vergleich und Abgleich der Produktkategorien der Suchbegriffe und der Suchstrings kann die Relevanz des gebuchten Suchbegriffs für das Produkt automatisch ermittelt werden.

In einer weiteren bevorzugten Ausführungsform ermöglicht die mindestens eine von dem Online-Shop an den Server übermittelte Information bezüglich des bestellten Produkts eine Angabe bezüglich einer Produktbezeichnung, des Verkaufspreises, einer zugeordneten Warengruppe und/oder eines erzielten Gewinns. Derartige Informationen können besonders vorteilhaft bei der Auswahl der für das Produkt relevanten Werbepartner und/oder Netzwerkseiten (bzw. Suchbegriffe) eingesetzt werden. Sind bei dem Server beispielsweise mehrere, unterschiedlich aufwändige Auswerteverfahren zur Auswahl des Werbepartner vorgesehen, so kann beispielsweise anhand des Verkaufspreises entschieden werden, ob ein mehr oder ein weniger aufwändiges Auswerteverfahren eingesetzt werden soll.

In einer besonders vorteilhaften Weiterbildung des Verfahrens, ist dem Werbepartner eine Suchmaschine zugeordnet, wobei die durch den Benutzer von dem Werbepartner angeforderte Netzwerkseite in Abhängigkeit von einem durch den Benutzer angegebenen Suchbegriff von der Suchmaschine erstellt und der von dem Benutzer in die Suchmaschine eingegebene Suchbegriff bei der Auswahl des Werbepartners ausgewertet wird. Vorzugsweise wird als der dem Online-Shop zugeordnete Link ein ermittelter Treffer des Suchergebnisses der Suchmaschine und/oder ein Werbebanner auf der angezeigten Netzwerkseite der Suchmaschine dargestellt. Die Eingabe einer bestimmten Suchstrings durch den Benutzer veranlasst die Suchmaschine, eine Netzwerkseite mit den relevanten Treffern (eine sog. Suchergebnisliste) zu erzeugen und an den Client zu übermitteln, wo sie angezeigt wird. Bestimmte Suchbegriffe als Teil der eingegebenen Suchstrings können von dem Online-Shop direkt oder indirekt über ein Tracking-System bei dem Werbepartner gebucht werden, so dass jedes Mal wenn ein Benutzer den gebuchten Suchbegriff eingibt ein bestimmter Link, vorzugsweise in Form eines Werbebanners, auf der Netzwerkseite dargestellt wird.

Die an den Server übermittelten und abgespeicherten Informationen umfassen dann beispielsweise den gebuchten Suchbegriff, den von dem Benutzer eingegebenen Suchstring und Angaben über den Werbepartner. Diese Information erlauben eine Aussage darüber, von welchen Werbepartnern der Client vor der Abgabe der Bestellung bei dem Online-Shop eine Netzwerkseite angefordert hat und welche Netzwerkseiten er sich hat anzeigen lassen bzw. welche Suchbegriffe er in Suchmaschinen oder bei Preisvergleichen eingegeben hat. Ein Auswerten dieser Informationen durch den Server kann Auskunft darüber geben, welche Suchbegriffe häufig zu einer Bestellung eines Produkts führen und deshalb besonders relevant sind und welche praktisch nie zu einer Bestellung führen und deshalb weniger relevant sind. Außerdem können durch Auswerten dieser Informationen für ein bestimmtes Produkt oder für den Online-Shop relevante Werbepartner ermittelt werden.

Vorteilhafterweise werden der Werbepartner und/oder das Tracking-System bezüglich mindestens einer Branche oder eines Themenbereichs klassifiziert. Damit kann das Verfahren zur Auswahl eines Werbepartner nochmals verbessert werden, indem beispielsweise derjenige Werbepartner ausgewählt wird, der derselben Branche wie das bestellte Produkt angehört.

In einer bevorzugten Ausführungsform des Verfahrens speichert der Server zusammen mit den von dem Client übermittelten Informationen mindestens eine weitere Information in dem dem Server zugeordneten Speicherbereich ab. Eine derartige Information kann dann dem Online-Shop zur Verfügung gestellt werden und/oder bei der Auswahl des Werbepartner eingesetzt werden. Dabei ist es möglich, dass diese Information von dem Server selbst erzeugt wird und/oder dass diese Information von einem Werbepartner oder Tracking-System an den Server übermittelt wird.

Vorzugsweise enthält die mindestens eine weitere Information eine Uhrzeit, ein Datum, eine Häufigkeit, eine Identifikation des Client, eine Identifikation des Benutzers, eine Identifikation des Online-Shops, eine Identifikation des Werbepartners, eine Identifikation eines dem Werbepartner zugeordneten Tracking-Systems und/oder eine Klassifizierung des Werbepartners. Mit derartigen Informationen kann die Ermittlung der Relevanz der Werbepartner und/oder der Netzwerkseiten (bzw. der Suchbegriffe) besonders zuverlässig erfolgen.

Falls eine Bestellung storniert wird oder ein von dem Benutzer bei dem Online-Shop gekauftes Produkt zurückgegeben wird, übermittelt der Online-Shop automatisch eine Information an den Server. Der Server veranlasst daraufhin automatisch, dass eine die Stornierung oder die Rückgabe des gekauften Produkts beschreibende Information an den ausgewählten Werbepartner und/oder an das dem Werbepartner zugeordnete Tracking-System weitergeleitet wird. Dabei wird vorteilhafterweise die Auswertung hinsichtlich der Relevanz der Werbepartner und/oder der Netzwerkseiten (bzw. der Suchbegriffe) korrigiert und die Vergütung des ausgewählten Werbepartners zurückgenommen.

Die der vorliegenden Erfindung zugrundeliegende Aufgabe wird auch durch ein Client-Server-System der eingangs genannten Art dadurch gelöst, dass
- das Client-Server-System einen Server umfasst, der mit dem Kommunikationsnetzwerk verbunden ist;
- das Client-Server-System Mittel aufweist, um automatisch mindestens eine Information bezüglich der Aktivierung der Links von dem Client über das Kommunikationsnetzwerk an den Server zu übermitteln;
- dem Server ein Speicherbereich zugeordnet ist und der Server Mittel aufweist, um die übermittelte mindestens eine Information bezüglich der Aktivierung der Links automatisch abzuspeichern;
- der Server Mittel aufweist, um den Client automatisch zu veranlassen, eine dem Online-Shop zugeordnete Netzwerkseite anzufordern;
- der Online-Shop Mittel aufweist, um in Abhängigkeit von einer durch den Benutzer mittels des Client abgegeben Bestellung eines Produkts automatisch mindestens eine die Bestellung betreffende Information von dem Online-Shop an den Server zu übermitteln und der Server Mittel aufweist, die empfangene Information in dem ihm zugeordneten Speicherbereich abzuspeichern; und
- der Server Mittel aufweist, um die abgespeicherten Informationen bezüglich der Aktivierung mehrerer Links statistisch auszuwerten und um die für das Produkt relevanten Werbepartner und die für das Produkt relevanten Netzwerkseiten zu ermitteln.

Vorteilhafterweise weist das Client-Server-System Mittel zur Durchführung des erfindungsgemäßen Verfahrens auf.

Die Aufgabe wird ferner auch durch einen Server der eingangs genannten Art dadurch gelöst, dass der Server Mittel zur Durchführung des erfindungsgemäßen Verfahrens aufweist.

Ein derartiger Server kann beispielsweise ein Computer sein, der mit dem Internet verbunden ist und über das Internet Informationen mit dem Client, dem Online-Shop, mindestens einem Tracking-System und mindestens einem Werbepartner austauschen kann. Ist beispielsweise der Online-Shop als eigenständiger Computer ausgebildet, so ist es auch denkbar, dass der erfindungsgemäße Server als Software auf demselben Computer abläuft, der als Online-Shop mit dem Internet angeschlossen ist. Es ist aber auch denkbar, dass der Server Teil eines Tracking-Systems ist und beispielsweise als Software auf einem Computer des Tracking-Systems abläuft. Ein Austausch von Informationen zwischen dem Server und dem Online-Shop könnte dann auf bekannte Weise beispielsweise durch von dem Betriebssystem des Computers zur Verfügung gestellte Funktionalitäten realisiert werden.

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Mikroprozessor ablauffähig und zur Ausführung des erfindungsgemäßen Verfahrens geeignet. Insbesondere können zur Ausführung des erfindungsgemäßen Verfahrens Teile des Computerprogramms auf unterschiedlichen Rechengeräten ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein. Das Speicherelement kann auch als als Diskette, Compact Disk (CD), Digital Versatile Disk (DVD), und/oder mindestens ein mindestens einer Komponente des Client-Server-Systems zugeordneter Speicherbereich ausgebildet sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. In der Zeichnung zeigen:
- Figur 1: ein erfindungsgemäßes Client-Server-System, dessen Komponenten an das Internet angeschlossen sind; und
- Figur 2: ein Ablaufdiagramm eines erfindungsgemäßen Verfahrens.

Eine Vielzahl von Clients und Servern kommuniziert mittels des Internets. Diese bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem (zumindest virtuellen) Verzeichnis und einem der Netzwerkseite, beispielsweise dem HTML-Dokument, zugeordneten Namen zusammengesetzt. Eine URL erlaubt es, die dieser URL zugeordnete Netzwerkseite von einem Client aus anzuwählen. Dazu gibt ein Benutzer beispielsweise mittels einer Tastatur die URL in einem speziellen Eingabefeld des Browsers ein. Der Client generiert daraufhin eine Anfrage an den entsprechenden Server, der wiederum die angeforderte Netzwerkseite an den Client übermittelt. Dort wird die übermittelte Netzwerkseite dann beispielsweise mittels eines speziellen Computerprogramms, eines sogenannten Browsers darstellt. Als Browser bezeichnet man ein Computerprogramm, das in der Lage ist, HTML-Dokumente zu interpretieren und mittels einer geeigneten grafischen Oberfläche auf einem Display darzustellen.

Eine URL kann statt einer Netzwerkseite auch einem ausführbaren Computerprogramm auf dem Server zugeordnet sein. Ein derartiges Computerprogramm ist beispielsweise ein sogenanntes perl-script. Ein perl-script ist eine in der Programmiersprache perl codierte Abfolge von Anweisungen. Ruft ein Client eine URL auf, die einem derartigen Computerprogramm zugeordnet ist, so wird dieses Computerprogramm auf dem Server ausgeführt. Die Ausführung des Computerprogramms kann auch eine Übermittlung von Informationen an den Client, beispielsweise in der Form einer Netzwerkseite, vorsehen. Selbstverständlich kann das Computerprogramm auch in einer anderen Sprache, insbesondere in einer anderen Script-Sprache, beispielsweise als java-script, realisiert sein.

In einem HTML-Dokument ist es möglich, URLs weiterer Netzwerkseiten beziehungsweise HTML-Dokumente anzugeben. Derartige URLs werden als Verweis oder als Link bezeichnet. Werden Links mittels eines Browsers einem Benutzer dargestellt, so hat der Benutzer die Möglichkeit, einen dargestellten Link anzuwählen und sich die der angewählten URL entsprechende Netzwerkseite anzeigen zu lassen. Selbstverständlich kann sich die angewählte Netzwerkseite auf einem anderen mit dem Internet verbundenen Server befinden.

Häufig wird von einem ersten Server, beispielsweise von einem Online-Shop, ein zweiter Server, beispielsweise ein Werbepartner beauftragt, auf Netzwerkseiten, die von dem Werbepartner an einen diese Netzwerkseite anfordernden Client übermittelt werden, einen Link auf eine Netzwerkseite des Online-Shop darzustellen. Ein solcher Link kann beispielsweise ein sogenannter Werbebanner sein, der mittels einer textuellen und/oder grafischen Darstellung für ein über den Online-Shop zu beziehendes Produkt oder für eine über den Online-Shop vermittelte Dienstleistung wirbt. Ist der Werbepartner als Suchmaschine ausgestaltet, so kann der Online-Shop den Werbepartner beauftragen, auf einer in Abhängigkeit eines von einem Benutzer eingegebenen Suchbegriffes erzeugten Netzwerkseite (sog. Suchergebnisliste), einen Link auf eine dem Online-Shop zugeordnete Netzwerkseite darzustellen. Typischerweise beauftragt ein Online-Shop mehrere Werbepartner damit, für bestimmte Suchbegriffe Links auf deren Netzwerkseiten darzustellen. Der dem Online-Shop zugeordnete Link kann beispielsweise als ein ermittelter Treffer des Suchergebnisses der Suchmaschine und/oder als ein Werbebanner auf der angezeigten Netzwerkseite der Suchmaschine dargestellt werden.

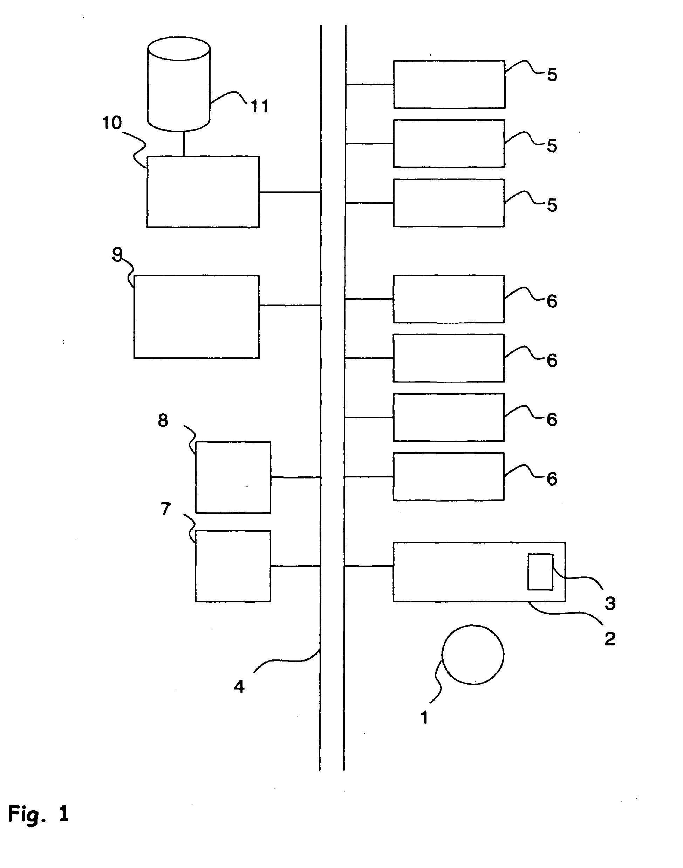

In Figur 1 ist schematisch ein Client-Server-System dargestellt, das zur Durchführung des erfindungsgemäßen Verfahrens geeignet ist. Ein einem Benutzer 1 zugeordneter Client 2 weist einen Speicherbereich 3 auf und ist mit einem Kommunikationsnetzwerk, beispielsweise dem Internet 4 verbunden. Der Client 2 ist beispielsweise als Desktop Computer oder als Laptop ausgestaltet. Der Client 2 kann auch als Personal Computer (PC), Pocket Computer, Personal Digital Assistant (PDA) oder als Mobilfunk-Telefon ausgestaltet sein. Der Client 2 weist in Figur 1 nicht dargestellte Mittel auf, die es dem Benutzer 1 ermöglichen, mit dem Client 2 zu interagieren. Derartige Mittel sind beispielsweise eine Tastatur, ein Display, ein Zeigegerät (beispielsweise eine sogenannte Computermaus) und Lautsprecher.

Das Client-Server-System weist ferner mehrere Werbepartner 5, 6 auf, die mit dem Internet 4 verbunden sind. Dabei können die Werbepartner 5, 6 beispielsweise als Suchmaschinen ausgestaltet sein. Die Werbepartner 5, 6 können auch sogenannte Informationsserver sein, die allgemeine Informationen, beispielsweise Nachrichten, oder themenbezogene Informationen, beispielsweise zu medizinischen Themen, zur Verfügung stellen. Es ist auch denkbar, dass die Werbepartner 5, 6 als eine Einrichtung zum Preisvergleich ausgebildet sind.

In Figur 1 sind ferner Tracking-Systeme 7, 8, ein Online-Shop 9, sowie ein Server 10 dargestellt, die ebenfalls mit dem Internet verbunden sind. Dem Server 10 ist ein Speicherbereich zugeordnet, der beispielsweise als Datenbank 11 ausgebildet ist. Der Server 10 kann auch Teil eines oder mehrerer der Tracking-Systeme 7, 8 sein, bspw. in Form einer Software, die auf einem Computer des Tracking-Systems 7 oder 8 abläuft. Es ist auch denkbar, dass der Server 10 Teil des Online-Shops 9 ist.

Bei dem in Figur 1 dargestellten Client-Server-System sind die Werbepartner 5 dem Tracking-System 7 und die Werbepartner 6 dem Tracking-System 8 zugeordnet. Selbstverständlich ist dies nur ein Beispiel für eine mögliche Ausgestaltung des Client-Server-Systems. Die Erfindung betrifft eine beliebige Anzahl von einem Online-Shop zugeordneten Werbepartnern, die selbst wiederum in beliebigen Konstellationen einer beliebigen Anzahl von Tracking-Systemen zugeordnet sind. Dabei ist es auch möglich, dass einzelne Werbepartner überhaupt keinem Tracking-System zugeordnet sind.

Auf dem Client 2 laufen mehrere Computerprogramme ab, die es dem Client 2 ermöglichen, mit anderen Komponenten des Client-Server-Systems, also den Werbepartnern 5, 6 , den Tracking-Systemen 7, 8, dem Online-Shop 9 und dem Server 10, Daten auszutauschen. Eines dieser Programme ist beispielsweise ein Browser, mittels dessen von dem Benutzer 1 über den Client 2 angeforderte Netzwerkseiten dem Benutzer 1 angezeigt werden. Beispielsweise kann der Benutzer 1 mittels des Client 2 von dem Werbepartner 5, 6 Informationen anfordern. Der Werbepartner 5, 6 übermittelt die angeforderten Informationen in Form einer Netzwerkseite. Diese ist beispielsweise in der Seitenbeschreibungssprache HTML codiert. Empfängt der Client 2 die Netzwerkseite, so wird diese von dem Browser aufbereitet und mittels des Displays dem Benutzer 1 angezeigt.

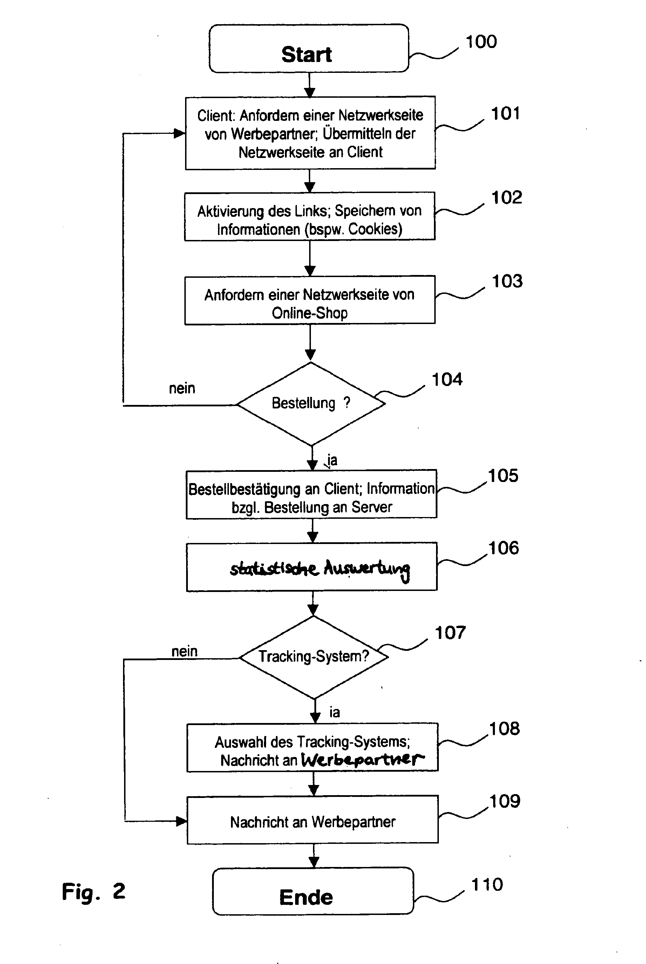

Die Funktionsweise des erfindungsgemäßen Client-Server-Systems bei der Durchführung des erfindungsgemäßen Verfahrens ist beispielhaft in Figur 2 schematisch dargestellt.

Das Verfahren startet in einem Schritt 100. In einem Schritt 101 fordert der Benutzer 1 mittels des Client 2 (beispielsweise durch Eingabe einer URL in ein in dem Browser dafür vorgesehenes Texteingabefeld) eine Netzwerkseite von einem dem Online-Shop 9 zugeordneten Werbepartner 5, 6 an. Ein derartiger Werbepartner 5, 6 kann beispielsweise ein sogenanntes Shopping-Portal sein, das eine Mehrzahl von Links zu verschiedenen Online-Shops 9 zur Verfügung stellt. Dem Benutzer 1 werden - ausgehend von der Startseite des Shopping-Portals - beispielsweise geordnet nach Branchen, ein oder mehrere Links zu einem oder mehreren Online-Shops 9 angezeigt.

Ein Werbepartner 5, 6 kann im weitesten Sinne jeder Anbieter sein, der mittels eines dem Anbieter zugeordneten Servers Netzwerkseite zum Abruf durch einen Client 2 zur Verfügung stellt, wobei die Netzwerkseite einen Link zu einem Online-Shop 9 aufweist. Anbieter derartiger Netzwerkseiten sind beispielsweise kommerzielle Anbieter von Informationen. Anbieter derartiger Netzwerkseiten sind häufig aber auch Privatpersonen, die durch das Darstellen von Links zu Online-Shops 9 auf einer oder mehrerer der von diesen angebotenen Netzwerkseiten einen finanziellen Gewinn erzielen wollen oder die dadurch erreichen, dass das Zurverfügungstellen ihrer Netzwerkseiten im Internet kostenfrei ist.

Der Werbepartner 5, 6 veranlasst, dass die von dem Benutzer 1 mittels des Client 2 angeforderte Netzwerkseite an den Client 2 übermittelt wird. Diese Netzwerkseite enthält einen Link zu dem Online-Shop 9. Selbstverständlich ist es möglich, dass der Benutzer 1 zuvor mittels des Client 2 mehrere andere Netzwerkseiten und/oder dieselbe Netzwerkseite mehrfach von dem Werbepartner 5, 6 anfordert und beispielsweise den dem Benutzer 1 mittels des Browsers auf dem Monitor dargestellten Inhalt liest.

In einem Schritt 102 schließlich aktiviert der Benutzer 1 den auf der Netzwerkseite dargestellten Link zu dem Online-Shop 9. Die Aktivierung dieses Links veranlasst zunächst den Werbepartner 5, 6 (beispielsweise mittels eines auf dem Werbepartner 5, 6 vorgesehenen perl-scripts, das durch die Aktivierung des Links gestartet wird) Informationen bezüglich der Aktivierung des Links von dem Client 2 an den Server 10 zu übermitteln. Dort werden die Informationen dann abgespeichert. Wenn zu einem späteren Zeitpunkt ein anderer Link aktiviert wird, können die diesen Link betreffenden Informationen ebenfalls an den Server 10 übermittelt und dort abgespeichert werden. Es ist denkbar, dass eine auf dem Server 10 geführte History- oder Logging-Datei durch die übermittelten Informationen ergänzt wird und die übermittelten Informationen von verschiedenen nacheinander aktivierten Links kumulativ in dem Server 10 abgespeichert werden.

Alternativ können die Informationen auch in einem Server-Cookie oder einem Werbepartner-Cookie abgelegt werden, das bei dem Client 2 gesetzt wird. Dazu kann der Server 10 bzw. ein Werbepartner 5, 6 Informationen an den Client 2 senden und veranlassen, dass der Client 2 diese Information in Form eines Cookies beispielsweise in dem Speicherbereich 3 abspeichert. Der auf Veranlassung eines Werbepartners 5, 6 bei dem Client 2 abgespeicherte Cookie wird im folgenden als Werbepartner-Cookie bezeichnet. Außer den den aktivierten Link betreffenden Informationen kann der Werbepartner-Cookie auch die Uhrzeit, das Datum, eine Identifizierung der Netzwerkseite und/oder eine Identifizierung des Links (also beispielsweise des Werbebanners, der auf der Netzwerkseite dargestellt ist) beinhalten.

Durch die Aktivierung des Links durch den Benutzer 1 wird ferner der Server 10 zur Ausführung eines Computerprogramms veranlasst. Auch dieses Computerprogramm kann in Form eines Scripts, beispielsweise als perl-script vorliegen, das durch die Eingabe und das Absenden einer URL durch den Client 2 gestartet wird. Durch die Ausführung dieses Computerprogramms veranlasst der Server 10, dass auf dem Client 2 ein weiteres Cookie gesetzt wird, das im folgenden als Server-Cookie bezeichnet wird. Das Server-Cookie beinhaltet beispielsweise Informationen, die eine Identifizierung des Werbepartners 5, 6, eine Identifizierung des aktivierten Links, eine Uhrzeit, und/oder ein Datum enthalten.

Das Server-Cookie kann insbesondere auch eine besonders niedrige Vertraulichkeitsstufe dadurch haben, dass nur besonders wenig vertrauliche Informationen in dem Server-Cookie abgespeichert werden. Damit ist es beispielsweise möglich, ein Server-Cookie auch dann bei dem Client 2 zu setzen, wenn ein auf dem Client 2 ablaufender Browser eine hohe Sicherheitsstufe eingestellt hat und demzufolge nur das Setzen von Cookies mit einer besonders niedrigen Vertraulichkeitsstufe zulässt. Darin, dass es mit dem erfindungsgemäßen Verfahren möglich ist, zwischen dem Client 2 und dem Server 10 nur Cookies sehr geringer Vertrauensstufe auszutauschen, ist eine Durchführbarkeit dieses Verfahrens auch dann möglich, wenn bei dem Browser des Client 2 eine besonders hohe Sicherheitsstufe eingestellt ist, so dass Cookies hoher Vertrauensstufe bei dem Client 2 nicht abgespeichert bzw. nicht von dem Client 2 an einen anfordernden Server übermittelt werden.

Der Server 10 speichert Informationen bezüglich der Aktivierung mehrerer Links, die von dem Benutzer 1 auf dem Weg zur Bestellung des Produkts nacheinander angeklickt werden, in einem dem Server 10 zugeordneten Speicherbereich, beispielsweise der Datenbank 11, ab. Die Datenbank 11 enthält also eine History- oder Logging-Datei, in der Informationen bezüglich mehrerer, vorzugsweise aller, Links bis hin zur Bestellung des Produkts protokolliert sind. Die abgespeicherten Informationen können eine oder mehrere der oben genannten Informationen enthalten. In der Datenbank 11 können auch weitere Informationen, wie beispielsweise eine Identifizierung des Client 2, abgespeichert werden. Insbesondere ist es vorstellbar, dass die Informationen in der Datenbank 11 derart abgespeichert werden, dass eine Zuordnung zu dem Server-Cookie oder dem Werbepartner-Cookie möglich ist. Alternativ können die beim Server 10 abgespeicherten Informationen auch in dem auf dem Client 2 gesetzten Server-Cookie und/oder Werbepartner-Cookie abgespeichert sein.

Die in den aktivierten Link betreffenden Informationen, die in Form der History- oder Logging-Datei auf dem Server 10 und/oder in Form von Cookies auf dem Client 2 abgespeichert sind, können besonders vorteilhaft bei der Auswahl der für das bestellte Produkt relevanten Werbepartner 5, 6 und/oder relevanten Netzwerkseiten (bzw. Suchbegriffe) eingesetzt werden. Dieser Schritt wird nachfolgend unter Bezugnahme auf den Schritt 106 näher erläutert.

Ist dem Client 5, 6 ein Tracking-System 7, 8 zugeordnet, so können Informationen bezüglich des Tracking-Systems 7, 8 in dem Server-Cookie und/oder in der Datenbank 11 abgelegt werden. Ferner kann veranlasst werden, dass ein auf dem Tracking-System 7, 8 abgespeichertes Computerprogramm ausgeführt wird. Auch dieses Computerprogramm kann als perl-script ausgeführt sein, das durch Anforderung einer diesem perl-script zugeordneten URL ausgeführt wird. Die Ausführung des Computerprogramms auf dem Tracking-System 7, 8 kann wiederum das Setzen eines Cookies bei dem Client 2 zur Folge haben. Ein derartiges Cookie wird im folgenden als Tracking-System-Cookie bezeichnet.

Die in dem Tracking-System-Cookie abgespeicherten Informationen können Informationen bezüglich einer Identifizierung des Werbepartners 5, 6, einer Identifizierung des aktivierten Links, einer Uhrzeit, und/oder eines Datums enthalten. Das Tracking-System 7, 8 kann ferner vorsehen, dass weitere Informationen in einem dem Tracking-System 7, 8 zugeordneten Speicherbereich abgelegt werden. Insbesondere kann vorgesehen sein, dass diese Informationen derart abgespeichert werden, dass eine Zuordnung zu dem bei dem Client 2 abgelegten Tracking-System-Cookie möglich ist.

Eine Erkennung, ob einem Werbepartner 5, 6 ein Tracking-System 7, 8 zugeordnet ist, kann beispielsweise durch die Information erfolgen, die einem auf der Netzwerkseite des Werbepartners 5, 6 dargestellten Link zugeordnet ist. Im einfachsten Fall weist dieser Link eine URL zu dem bei dem Tracking-System 7, 8 abgespeicherten Computerprogramm auf, das bei Aktivierung des Links ausgeführt wird. Vorstellbar ist es auch, dass der Server 10 zumindest für den Online-Shop 9 in einem dem Server 10 zugeordneten Speicherbereich, beispielsweise der Datenbank 11, für jeden Werbepartner 5, 6, der einem Tracking-System 7, 8 zugeordnet ist, Informationen bezüglich dieser Zuordnung bereithält und diese Informationen bei der Ausführung des durch die URL auf dem Server 10 gestarteten Computerprogramms auswertet. Selbstverständlich sind eine Vielzahl weiterer Möglichkeiten vorstellbar um zu Erkennen, ob und welchem Tracking-System 7, 8 ein Werbepartner 5, 6 zugeordnet ist.

In einem Schritt 103 wird schließlich - ebenfalls durch die Aktivierung des auf der von dem Werbepartner 5, 6 durch den Client 2 empfangenen Netzwerkseite dargestellten Links - von dem Online-Shop 9 eine Netzwerkseite angefordert. Diese Netzwerkseite ist beispielsweise die home-page des Online-Shop 9 oder eine Netzwerkseite, die eine Beschreibung eines Produkts enthält. Es ist vorstellbar, dass auch bei dem Online-Shop 9 ein Computerprogramm gestartet wird, das beispielsweise das Setzen eines Cookies bei dem Client 2 veranlasst. Ein derartiges Cookie wird im folgenden als Online-Shop-Cookie bezeichnet.

In einem Schritt 104 wird geprüft, ob der Benutzer 1 eine Bestellung eines Produkts bei dem Online-Shop 9 veranlasst. Ist dies nicht der Fall, so wird das Verfahren in dem Schritt 101 oder in dem Schritt 103 fortgesetzt und werden die bisherigen Verfahrensschritte so oft wiederholt, bis ein Produkt bestellt wird. Die wiederholte Ausführung der bisherigen Schritte kann sich auch über einen längeren Zeitraum hinweg, beispielsweise über mehrere Tage oder Wochen, erstrecken. Das führt dazu, dass nach mehrmaliger Ausführung der Verfahrensschritte bei dem Server 10 Informationen bezüglich der Aktivierung verschiedener Links abgespeichert sind.

Wird das Verfahren in dem Schritt 101 fortgesetzt, so kann der Benutzer 1 von jedem der Werbepartner 5, 6 eine Netzwerkseite anfordern. Wenn der Benutzer 1 bei unterschiedlichen Werbepartnern 5, 6 einen Link aktiviert und dadurch immer wieder zu dem Online-Shop 9 geführt wird, ist das erfindungsgemäße Verfahren besonders vorteilhaft, da dann einer der Werbepartner 5, 6 ausgewählt werden muss, dem die erfolgte Bestellung zugerechnet werden soll und der dann beispielsweise eine Vergütung erhält. Durch geeignetes Auswerten der aufgezeichneten Informationen bezüglich der Aktivierung der Links kann bspw. derjenige Werbepartner 5, 6 ausgewählt werden, auf dessen Netzwerkseite unmittelbar vor der Bestellung des Produkts ein dem Online-Shop 9 zugeordneter Link aktiviert wurde. Mehrfachvergütungen werden dadurch vermieden.

Das Verfahren wird in dem Schritt 103 fortgesetzt, wenn der Benutzer 1 direkt eine Netzwerkseite von dem Online-Shop 9 anfordert. Eine direkte Anforderung kann beispielsweise durch Eingabe einer entsprechenden URL in den Browser erreicht werden. Eine direkte Anforderung einer Netzwerkseite von dem Online-Shop 9 kann auch dadurch erreicht werden, dass der Benutzer 1 den Browser bereits bei einer zurückliegenden Anforderung einer Netzwerkseite von dem Online-Shop 9 (beispielsweise als Folge der Aktivierung eines auf einer Netzwerkseite eins Werbepartner 5, 6 dargestellten Links) veranlasst hat, die von dem Online-Shop 9 an den Client 2 übermittelte Netzwerkseite oder die dieser Netzwerkseite zugeordnete URL an geeigneter Stelle bei dem Client 2 abzuspeichern (bspw. in einer Liste der Favoriten) und nun einen auf der abgespeicherten Netzwerkseite vorhandenen Link aktiviert oder die der Netzwerkseite zugeordnete und abgespeicherte URL erneut aufruft.

Veranlasst der Benutzer 1 schließlich die Bestellung eines Produkts bei dem Online-Shop 9, so wird das Verfahren in einem Schritt 105 fortgesetzt. In dem Schritt 105 übermittelt der Online-Shop 9 an den Client 2 eine die Bestellung betreffende Information in Form einer sogenannte Bestellbestätigungsseite. Dies ist eine Netzwerkseite, mittels der der Benutzer 1 von der Auftragsannahme durch den Online-Shop 9 informiert wird. Wird die Bestellbestätigungsseite dynamisch erzeugt, so kann sie aktuelle Daten wie beispielsweise den Preis, das Bestelldatum und die Anzahl des bestellten Produkts enthalten. Damit ist das Aufzeichnen der die aktivierten Links betreffenden Informationen in der History- oder Logging-Dateien beendet.

In einem Schritt 106 wird der Server 10 veranlasst, die aufgezeichneten Informationen betreffend die aktivierten Links statistisch auszuwerten, um die für das bestellte Produkt relevanten Werbepartner 5, 6 und/oder relevanten Netzwerkseiten (bzw. Suchbegriffe) zu ermitteln. Diejenigen Netzwerkseiten, auf denen Links dargestellt werden, die überdurchschnittlich häufig zu einer Bestellung eines Produkts führen, und diejenigen Werbepartner 5, 6, auf deren Netzwerkseiten Links dargestellt werden, die überdurchschnittlich häufig zu einer Bestellung eines Produkts führen, gelten als besonders relevant für das Produkt bzw. den Online-Shop 9. Das erfindungsgemäße Verfahren erlaubt es, die Links eines Online-Shops 9 besonders effektiv, d.h. bezüglich der Marketingausgaben des Online-Shops 9 kostenoptimiert und bezüglich der Ressourcen des Client-Server-Systems ressourcenoptimiert bei den Werbepartnern 5, 6 zu platzieren.

Zum Auswerten der die aktivierten Links betreffenden Informationen können zusätzliche die Bestellung betreffende Informationen herangezogen werden. Diese zusätzlichen Informationen kann der Online-Shop 9 an den Server 10 übermitteln, bspw. im Rahmen der Übermittlung der Bestellbestätigungsseite. Dies kann auf direktem Wege geschehen - beispielsweise dadurch, dass der Online-Shop 9 eine URL des Servers 10 anwählt, der ein Computerprogramm zugeordnet wird, das durch die Anwahl gestartet wird. Dieses Computerprogramm kann wieder als Script ausgebildet sein. Es ist möglich, dass der Online-Shop 9 bei dem Aufruf der URL oder im Laufe der Abarbeitung des Computerprogramms auf dem Server 10 Informationen bezüglich der erfolgten Bestellung an den Server 10 übermittelt. Derartige Informationen können beispielsweise der Verkaufspreis, eine Produktkennnummer, ein Verkaufsdatum, eine Identifikation des Benutzers 1 und/oder eine Identifikation des Client 2 sein.

Es ist vorstellbar, dass zur Veranlassung des Auswahlverfahrens die an den Client 2 übermittelte Bestellbestätigungsseite ein Element enthält, das den Client 2 veranlasst, das Auswahlverfahren auf dem Server 10, beispielsweise durch Anwahl einer dem Auswahlverfahren zugeordneten URL, zu starten. Ein derartiges Element kann beispielsweise ein sogenanntes image-tag sein. Ein image-tag ist ein HTML-Konstrukt, das ein vollständig oder nahezu unsichtbares Bild (bspw. von der Größe nur eines Pixels) auf einem dem Client 2 zugeordneten Display erzeugt. Mit einem image-tag können weitere Informationen verbunden sein, die von dem Browser interpretiert werden und als Anweisungen ausgeführt werden.

Es ist vorstellbar, dass der Client 2 durch ein oder mehrere auf der Bestellbestätigungsseite dargestellte image-tags dazu veranlasst wird, eine Nachricht an den Server 10 zu senden. Diese Nachricht kann einerseits das durch den Server 10 durchzuführende Verfahren zur Auswahl eines Werbepartner 5, 6 starten. Diese Nachricht kann aber auch weitere Informationen enthalten. Insbesondere kann vorgesehen sein, dass der Client 2 die bei diesem abgespeicherten Server-Cookies bzw. Werbepartner-Cookies - soweit vorhanden - an den Server 10 sendet und damit das Auswahlverfahren auf dem Server 10 startet.

Eine oben beschrieben Information bezüglich der Bestellung kann sowohl direkt von dem Online-Shop 9 an den Server 10 gesandt werden oder indirekt über den Client 2. Dazu ist es vorstellbar, die Informationen bezüglich der Bestellung zusammen mit der Bestellbestätigungsseite an den Client 2 zu senden und diesen zu veranlassen, diese Informationen seinerseits an den Server 10 zu übermitteln.

Die Durchführung des Auswahlverfahrens selbst geschieht in dem Schritt 106 durch den Server 10. Dazu werden zunächst die Werbepartner 5, 6 ermittelt, von denen der Benutzer 1 und/oder der Client 2 eine Netzwerkseite angefordert hat und dann den dort dargestellten Link zu dem Online-Shop 9 aktiviert hat. Dies sind mit anderen Worten all die Werbepartner 5, 6, über die der Benutzer 1 bzw. der Client 2 zu dem Online-Shop 9 geführt wurde. Die Feststellung dieser Werbepartner 5, 6 ist auf verschiedene Arten durchführbar, die von den abgespeicherten Cookies, den in den Cookies abgespeicherten Informationen, weiteren bei dem Server 10 abgespeicherten Informationen und/oder weiteren bei dem Tracking-System 7, 8 abgespeicherten Informationen abhängt. So ist es möglich, dass dem Server 10 eine Identifikation des Client 2 und/oder des Benutzers 1 vorliegt.

Eine derartige Identifikation kann beispielsweise von dem Online-Shop 9 an den Server 10 übermittelt werden. Eine solche Identifikation kann aber insbesondere auch in Form des Server-Cookies erfolgen, der in dem Schritt 102 bei dem Client 2 abgespeichert,wurde und nun von dem Client 2 an den Server 10 übermittelt wird. Die Übermittlung des Server-Cookies von dem Client 2 an den Server 10 kann beispielsweise wie oben beschrieben infolge der durch den Client 2 empfangenen Bestellbestätigungsseite geschehen.

Liegt dem Server 10 eine Identifikation des Client 2 vor, so kann er beispielsweise ohne die Verwendung von Cookies durch eine Abfrage der Datenbank 11 bzw. des Inhalts der History- oder Logging-Datei direkt all die Werbepartner 5, 6 erhalten, über die der Benutzer 1 bzw. der Client 2 zu dem Online-Shop 9 geführt wurde. Dies setzt selbstverständlich voraus, dass in dem Schritt 102 diese Informationen an den Server 10 übermittelt und von diesem abgespeichert wurden.

Die Werbepartner 5, 6, über die der Benutzer 1 bzw. der Client 2 zu dem Online-Shop 9 geführt wurde, können auch dadurch ermittelt werden, dass der Server 10 den Client veranlasst, alle Server-Cookies, Werbepartner-Cookies und/oder alle Tracking-System-Cookies an den Server 10, die Werbepartner 5, 6 und/oder an alle Tracking-Systeme 7, 8 zu senden, von denen der Client 2 zum Abspeichern des jeweiligen Cookies veranlasst wurde. Im weiteren können der Server 10, die Werbepartner 5, 6 bzw. die Tracking-Systeme 7, 8, die ein entsprechendes Cookie von dem Client 2 erhalten, den Server 10 entweder direkt oder indirekt über den Client 2 informieren.

Für einen derartigen Austausch von Informationen zwischen Clients und Servern sind eine Vielzahl von Mechanismen bekannt, die selbstverständlich von dem zugrundeliegenden Kommunikationsnetzwerk und den für die Kommunikation verwendeten Kommunikationsprotokollen abhängen. Das Einsetzen von Cookies und das Austauschen der entsprechenden Informationen ist nur eine dieser Möglichkeiten, die sich insbesondere anbietet, wenn das Kommunikationsnetzwerk das Internet 4 ist.

Falls der Werbepartner 5, 6 eine Suchmaschine ist, kann mit dem erfindungsgemäßen Verfahren auch diejenigen Suchbegriffe statistisch ausgewertet werden, die ursprünglich in die Suchmaschine eingegeben wurden und letzten Endes, das heißt nach mehreren Clicks oder der Eingabe weiterer Suchbegriffe, zur Bestellung des Produkts bei dem Online-Shop geführt haben. Auf diese Weise kann ein Return-of-Investment (ROI) von Ausgaben des Online-Shops für das Buchen bestimmter Suchbegriffe in Suchmaschinen und die Platzierung von Werbebannern bei Werbepartnern auch über einen längeren Zeitraum hinweg bzw. für mehrere zurückliegende Clicks wirksam und zuverlässig beobachtet und beeinflusst werden.

Nachdem die die aktivierten Links betreffenden Informationen ausgewertet wurden, wird in Schritt 107 geprüft, ob den Werbepartnern 5, 6 ein Tracking-System 7, 8 zugeordnet ist. Die dazu notwendigen Informationen, beispielsweise eine Liste mit allen Werbepartnern 5, 6 des Online-Shops 9 und den diesen Werbepartnern 5, 6 zugeordneten Tracking-Systemen 7, 8, können in der Datenbank 11 abgelegt sein. Dabei ist es vorstellbar, dass der Online-Shop 9 diese Informationen der Datenbank 11 zuführt. Die Informationen können aber auch durch die von dem Client 2 in dem Schritt 105 mittels der an den Server 10 übermittelten Cookies dem Server 10 zugeführt werden. Ebenso ist es vorstellbar, dass der Server 10 eine Anfrage an die Tracking-Systeme 7, 8 stellt und eine Information darüber anfordert, welchem dieser Tracking-Systeme 7, 8 die Werbepartner 5, 6 zugeordnet sind. Es ist auch möglich, dass der Server 10 von den Werbepartnern 5, 6 eine Information darüber anfordert, welchem Tracking-System 7, 8 sie zugeordnet sind.

Sind die Werbepartner 5, 6 einem Tracking-System 7, 8 zugeordnet, so wird in einem Schritt 108 von dem Server 10 veranlasst, dass dem Tracking-System 7, 8 eine Nachricht bezüglich der Relevanz der Werbepartner 5, 6 und/oder deren Netzwerkseiten (bzw. der Suchbegriffe) übermittelt wird. Das Tracking-System 7, 8 kann daraufhin weitere Schritte unternehmen, beispielsweise die Benachrichtigung der Werbepartner 5, 6.

Ist der Werbepartner 5, 6 keinem Tracking-System 7, 8 zugeordnet, so wird in einem Schritt 109 von dem Server 10 veranlasst, dass den Werbepartnern 5, 6 eine Nachricht bezüglich der ermittelten Relevanz übermittelt wird. Das Verfahren endet in einem Schritt 110.

Selbstverständlich sind weiter Ausführungsformen des erfindungsgemäßen Verfahrens und des erfindungsgemäßen Client-Server-Systems möglich.

Es ist vorstellbar, in dem Schritt 105 eine Abfrage vorzusehen, ob der Client 2 überhaupt durch die Aktivierung eines Link eines Werbepartner 5, 6 zu dem Online-Shop 9 geführt wurde. Ist dies der Fall, so muss bei dem Client 2 ein Server-Cookie abgespeichert sein. Für eine Entscheidung, ob der Client 2 durch die Aktivierung eines Link eines Werbepartners 5, 6 zu dem Online-Shop 9 geführt wurde, könnte folglich überprüft werden, ob auf dem Client 2 ein Server-Cookie vorhanden ist. Ist dies nicht der Fall, so könnte das Verfahren bereits in diesem Schritt beendet werden. Dadurch würde sichergestellt, dass nur dann Informationen an den Server 10 bezüglich einer Bestellung übermittelt werden, wenn die Bestellung überhaupt einem der Werbepartner 5, 6 zurechenbar ist. Somit können einerseits Ressourcen (bspw. Datenverkehr im Kommunikationsnetzwerk, Rechenzeit des Servers und/oder Rechenzeit der Tracking-System 7, 8) geschont werden und andererseits die Datensicherheit erhöht werden, da nur dann Informationen bezüglich einer erfolgten Bestellung an den Server 10 von dem Online-Shop 9 übermittelt werden, wenn der Server 10 tatsächlich bereits vorher in dem Verfahren beteiligt war.

Insbesondere ist es vorstellbar, dass auch der Online-Shop 9 über das Ergebnis der Auswertung in Schritt 106 informiert wird.

In einem weiteren Ausführungsbeispiel ist es möglich, dass der Online-Shop 9 einen Zugriff auf Teile der bei dem Server 10 abgespeicherten Informationen hat. Dazu könnte ein Zugriff des Online-Shops 9 auf die Datenbank 11 vorgesehen sein. Dies ermöglicht es dem Online-Shop 9, Informationen bei dem Server 10 abzulegen. Derartige Informationen sind beispielsweise eine Liste aller dem Online-Shop 9 zugeordneten Werbepartner 5, 6, eine Liste aller Tracking-Systeme 7, 8, und/oder URLs zu den Werbepartnern 5, 6, den Tracking-Systemen 7, 8 und insbesondere zu eventuell bei den Werbepartnern 5, 6 und den Tracking-Systemen 7, 8 abgelegten Computerprogrammen, die von dem Server 10 in Abhängigkeit von ebenfalls in der Datenbank 11 vorgegebenen Ereignissen ausgeführt werden sollen.

Mittels eines derartigen Zugriffs auf Teile der bei dem Server 10 abgespeicherten Informationen kann der Online-Shop 9 aber auch Informationen erhalten, um beispielsweise Statistiken über die Häufigkeit der Aktivierung bestimmter Links zu erhalten.

Es ist vorstellbar, dass der Server 10 als ein Software-Modul realisiert ist. In diesem Fall ist es insbesondere vorstellbar, dass der Server 10 auf einem dem Online-Shop 9 zugeordneten Rechengerät bzw. dem Online-Shop 9 selbst abläuft. Denkbar ist es auch, dass der Server 10 auf einem dem Tracking-System 7, 8 zugeordneten Rechengerät bzw. dem Tracking-System 7, 8 selbst abläuft.

## Patentansprüche

1. Verfahren zum Bestellen eines Produkts bei einem mit einem Kommunikationsnetzwerk verbundenen Online-Shop (9), dem eine mindestens einen Werbepartner (5, 6) umfassende, mit dem Kommunikationsnetzwerk verbundene Menge von Werbepartnern (5, 6) zugeordnet ist, wobei
a) eine von einem dem Online-Shop (9) zugeordneten Werbepartner (5, 6) bereitgestellte Netzwerkseite mittels eines einem Benutzer (1) zugeordneten Client (2) über das Kommunikationsnetzwerk angefordert wird;
b) die angeforderte Netzwerkseite an den Client (2) übermittelt wird und dem Benutzer (1) angezeigt wird;
c) der Benutzer (1) einen auf der angezeigten Netzwerkseite dargestellten und dem Online-Shop (9) zugeordneten Link aktiviert,
**dadurch gekennzeichnet, dass**
d) bei der Aktivierung des Links automatisch mindestens eine Information bezüglich der Aktivierung des Links von dem Client (2) an einen mit dem Kommunikationsnetzwerk verbundenen Server (10) gesendet und dort abgespeichert wird;
e) automatisch eine dem Online-Shop (9) zugeordnete Netzwerkseite durch den Client (2) angefordert wird;
f) die Schritte a) bis e) solange wiederholt werden, bis der Benutzer (1) das Produkt bei dem Online-Shop (9) bestellt, so dass dann Informationen bezüglich der Aktivierung mehrerer Links in dem Server (10) abgespeichert sind;
g) automatisch mindestens eine die Bestellung betreffende Information von dem Online-Shop (9) an den Server (10) übermittelt und dort abgespeichert wird; und
h) auf dem Server (10) die abgespeicherten Informationen bezüglich der Aktivierung der Links statistisch ausgewertet werden, um die für das Produkt relevanten Werbepartner (5, 6) und die für das Produkt relevanten Netzwerkseiten zu ermitteln.

2. Verfahren nach Anspruch 1, **dadurch gekennzeichnet, dass** unter Verwendung der abgespeicherten Informationen bezüglich der Aktivierung des Links automatisch mindestens ein relevanter Werbepartner (5, 6) aus der Menge der Werbepartner, von denen der Benutzer (1) eine Netzwerkseite angefordert und einen auf den Online-Shop (9) verweisenden Link aktiviert hat, ausgewählt wird.

3. Verfahren nach Anspruch 1 oder 2, **dadurch gekennzeichnet, dass** unter Verwendung der abgespeicherten Informationen bezüglich der Aktivierung des Links automatisch aus einer Vielzahl von bei den Werbepartnern (5, 6) gebuchter, auf den Online-Shop (9) verweisender Links mindestens ein relevanter Link ausgewählt wird.

4. Verfahren nach einem der Ansprüche 1 bis 3, **dadurch gekennzeichnet, dass** die Informationen auf dem Server (10) kumulativ abgespeichert werden.

5. Verfahren nach einem der Ansprüche 1 bis 4, **dadurch gekennzeichnet, dass** mindestens ein Tracking-System (7, 8) mindestens einem der Werbepartner (5, 6) zugeordnet und mit dem Kommunikationsnetzwerk verbunden ist, und dass der Server (10) Teil mindestens eines der Tracking-Systems (7, 8) ist.

6. Verfahren nach einem der Ansprüche 1 bis 5, **dadurch gekennzeichnet, dass** mindestens ein Tracking-System (7, 8) mindestens einem der Werbepartner (5, 6) zugeordnet und mit dem Kommunikationsnetzwerk verbunden ist, und dass das dem ausgewählten Werbepartner (5, 6) zugeordnete Tracking-System (7, 8) automatisch ermittelt wird und von dem Server (10) automatisch mindestens ein Teil der die Bestellung betreffenden Information an das dem ausgewählten Werbepartner (5, 6) zugeordnete Tracking-System (7, 8) übermittelt wird.

7. Verfahren nach einem der Ansprüche 1 bis 6, **dadurch gekennzeichnet, dass** der Client (2) in dem Schritt b) durch den Werbepartner (5, 6), nach dem Schritt d) durch den Server (10) und/oder in dem Schritt e) durch den Online-Shop (9) zum automatischen Abspeichern der Information in einem dem Client (2) zugeordneten Speicherbereich (3) veranlasst wird.

8. Verfahren nach Anspruch 7, **dadurch gekennzeichnet, dass** der Client (2) die in dem Speicherbereich (3) abgespeicherte Information automatisch an den Werbepartner (5, 6), den Server (10), das Tracking-System (7, 8) und/oder den Online-Shop (9) übermittelt.

9. Verfahren nach einem der Ansprüche 7 oder 8, **dadurch gekennzeichnet, dass** der Online-Shop (9) bei der Bestellung des Produkts den Client (2) automatisch veranlasst, die in dem Speicherbereich (3) abgespeicherten Informationen an den Server (10) zu übermitteln.

10. Verfahren nach einem der vorgehenden Ansprüche, **dadurch gekennzeichnet, dass** die in dem dem Client (2) zugeordneten Speicherbereich (3) abgespeicherten Informationen in Form eines Cookies abgespeichert werden.

11. Verfahren nach Anspruch 10, **dadurch gekennzeichnet, dass** nach Verstreichen einer vorgegebenen Lebensdauer des Cookies ein neuer Cookie generiert und abgespeichert wird, in dem zumindest ein Teil der Informationen des abgelaufenen Cookies enthalten sind.

12. Verfahren nach einem der Ansprüche 1 bis 9, **dadurch gekennzeichnet, dass** die in dem Server (10) abgespeicherten Informationen in Form einer History-Datei oder einer Logging-Datei abgespeichert werden.

13. Verfahren nach einem der vorangehenden Ansprüche, **dadurch gekennzeichnet, dass** die in dem Schritt d) von dem Client (2) bezüglich der Aktivierung des Links an den Server (10) übermittelte Information ein Datum, eine Uhrzeit, eine Identifikation des Client, eine Identifikation des Benutzers, eine Identifikation des Werbepartners (5, 6) und/oder eine Identifikation eines dem Werbepartner (5, 6) zugeordneten Tracking-Systems (7, 8) enthält.

14. Verfahren nach einem der vorangehenden Ansprüche, **dadurch gekennzeichnet, dass** die mindestens eine von dem Online-Shop (9) an den Server (10) übermittelte Information bezüglich des bestellten Produkts eine Angabe bezüglich einer Produktbezeichnung, des Verkaufspreises, einer zugeordneten Warengruppe, eines erzielten Gewinns oder einer Priorität ermöglicht.

15. Verfahren nach einem der vorangehenden Ansprüche, **dadurch gekennzeichnet, dass** dem Werbepartner (5, 6) eine Suchmaschine zugeordnet ist, und die durch den Benutzer (1) von dem Werbepartner (5, 6) angeforderte Netzwerkseite in Abhängigkeit von einem durch den Benutzer (1) angegebenen Suchbegriff von der Suchmaschine erstellt wird und der von dem Benutzer (1) in die Suchmaschine eingegebene Suchbegriff bei der Auswahl des Werbepartners (5, 6) ausgewertet wird.

16. Verfahren nach Anspruch 15, **dadurch gekennzeichnet, dass** als der dem Online-Shop (9) zugeordnete Link ein ermittelter Treffer des Suchergebnisses der Suchmaschine und/oder ein Werbebanner auf der angezeigten Netzwerkseite der Suchmaschine dargestellt wird.

17. Verfahren nach einem der vorangehenden Ansprüche, **dadurch gekennzeichnet, dass** der Server (10) zusammen mit der von dem Client (2) übermittelten Information mindestens eine weitere Information in dem dem Server (10) zugeordneten Speicherbereich (3) abspeichert.

18. Verfahren nach Anspruch 17, **dadurch gekennzeichnet, dass** die mindestens eine weitere Information eine Uhrzeit, ein Datum, eine Häufigkeit, eine Identifikation des Client, eine Identifikation des Benutzers, eine Identifikation des Online-Shops (9), eine Identifikation des Werbepartners (5, 6), eine Identifikation eines dem Werbepartner (5, 6) zugeordneten Tracking-Systems (7, 8), eine Klassifizierung des Werbepartners (5, 6) und/oder eine Klassifizierung des Produkts enthält

19. Client-Server-System umfassend einen einem Benutzer (1) zugeordneten Client (2), einen Online-Shop (9), dem mindestens ein Produkt zugeordnet ist, eine mindestens einen Werbepartner (5, 6) umfassende Menge von dem Online-Shop (9) zugeordneten Werbepartnern, und ein Kommunikationsnetzwerk, mittels dessen eine Kommunikation zwischen dem Client (2), dem Werbepartner (5, 6), und dem Online-Shop (9) möglich ist, wobei
- jedem der dem Online-Shop (9) zugeordneten Werbepartner (5, 6) mindestens eine Netzwerkseite zugeordnet ist, die mindestens einen durch den Client (2) über das Kommunikationsnetzwerk anforderbaren Link zu dem Online-Shop (9) aufweist;
- jeder Werbepartner (5, 6) Mittel aufweist, um die angeforderte Netzwerkseite automatisch an den Client (2) zu übermitteln und der Client (2) Mittel aufweist, um die empfangene Netzwerkseite dem Benutzer (1) anzuzeigen; und
- der Client (2) Mittel aufweist, um den auf der empfangenen Netzwerkseite dargestellten Link zu aktivieren,
**dadurch gekennzeichnet, dass**
- das Client-Server-System einen Server (10) umfasst, der mit dem Kommunikationsnetzwerk verbunden ist;
- das Client-Server-System Mittel aufweist, um automatisch mindestens eine Information bezüglich der Aktivierung der Links von dem Client (2) über das Kommunikationsnetzwerk an den Server (10) zu übermitteln;
- dem Server (10) ein Speicherbereich zugeordnet ist und der Server (10) Mittel aufweist, um die übermittelte mindestens eine Information bezüglich der Aktivierung der Links automatisch abzuspeichern;
- der Server (10) Mittel aufweist, um den Client (2) automatisch zu veranlassen, eine dem Online-Shop (9) zugeordnete Netzwerkseite anzufordern;
- der Online-Shop (9) Mittel aufweist, um in Abhängigkeit von einer durch den Benutzer (1) mittels des Client (2) abgegeben Bestellung eines Produkts automatisch mindestens eine die Bestellung betreffende Information von dem Online-Shop (9) an den Server (10) zu übermitteln und der Server (10) Mittel aufweist, um die empfangene Information in dem ihm zugeordneten Speicherbereich abzuspeichern; und
- der Server (10) Mittel aufweist, um die abgespeicherten Informationen bezüglich der Aktivierung mehrerer Links statistisch auszuwerten und um die für das Produkt relevanten Werbepartner (5, 6) und die für das Produkt relevanten Netzwerkseiten zu ermitteln.

20. Client-Server-System nach Anspruch 19, **dadurch gekennzeichnet, dass** das Client-Server-System Mittel zur Durchführung eines Verfahrens nach einem der Ansprüche 1 bis 18 aufweist.

21. Server (10) in einem Kommunikationsnetzwerk, mit dem mindestens ein einem Benutzer (1) zugeordneter Client (2), ein Online-Shop (9), und eine mindestens einen Werbepartner (5, 6) umfassende Menge von dem Online-Shop (9) zugeordneten Werbepartnern (5, 6) verbunden sind, **dadurch gekennzeichnet, dass** der Server (10) Mittel zur Durchführung eines Verfahrens nach einem der Ansprüche 1 bis 18 aufweist.

22. Computerprogramm, das auf einem Client-Server-System, insbesondere auf einem Client (2) des Client-Server-Systems und/oder einem Server (10) des Client-Server-Systems, ablauffähig ist, **dadurch gekennzeichnet, dass** das Computerprogramm derart programmiert ist, dass ein Verfahren nach einem der Ansprüche 1 bis 18 durchgeführt wird, wenn das Computerprogramm auf dem Client-Server-System abläuft.

23. Computerprogramm nach Anspruch 22, **dadurch gekennzeichnet, dass** das Computerprogramm auf einem Speicherelement abgespeichert ist.

24. Computerprogramm nach Anspruch 23, **dadurch gekennzeichnet, dass** das Speicherelement als eine Diskette, eine Compact Disk (CD), eine Digital Versatile Disk (DVD), und/oder als mindestens ein mindestens einer Komponente des Client-Server-Systems zugeordneter Speicherbereich ausgebildet ist.
